(19) Europäisches Patentamt

European Patent Office

Office européen des brevets

(11) **EP 1 647 009 B1**

(12) **EUROPÄISCHE PATENTSCHRIFT**

(45) Veröffentlichungstag und Bekanntmachung des Hinweises auf die Patenterteilung:
**27.12.2006 Patentblatt 2006/52**

(51) Int Cl.:
*G10L 19/00* (2006.01) *G06T 9/00* (2006.01)

(21) Anmeldenummer: **04765662.4**

(22) Anmeldetag: **28.09.2004**

(86) Internationale Anmeldenummer:
**PCT/EP2004/010854**

(87) Internationale Veröffentlichungsnummer:
**WO 2005/034088 (14.04.2005 Gazette 2005/15)**

(54) **VORRICHTUNG UND VERFAHREN ZUM VERARBEITEN EINES SIGNALS**

DEVICE AND METHOD FOR PROCESSING A SIGNAL

PROCEDE ET DISPOSITIF POUR TRAITER UN SIGNAL

(84) Benannte Vertragsstaaten:
**AT BE BG CH CY CZ DE DK EE ES FI FR GB GR HU IE IT LI LU MC NL PL PT RO SE SI SK TR**

(30) Priorität: **02.10.2003 DE 10345995**

(43) Veröffentlichungstag der Anmeldung:
**19.04.2006 Patentblatt 2006/16**

(73) Patentinhaber: **Fraunhofer-Gesellschaft zur Förderung der angewandten Forschung e.V.
80686 München (DE)**

(72) Erfinder:
- **GEIGER, Ralf
  98693 Ilmenau (DE)**
- **SCHULLER, Gerald
  99089 Erfurt (DE)**
- **SPORER, Thomas
  90766 Fürth (DE)**

(74) Vertreter: **Schoppe, Fritz et al
Schoppe, Zimmermann, Stöckeler & Zinkler
Patentanwälte
Postfach 246
82043 Pullach bei München (DE)**

(56) Entgegenhaltungen:
- **YOKOTANI Y, GEIGER R, SCHULLER G, ORAINTARA S, RAO K R: "Improved Lossless Audio Coding using the Noise-Shaped IntMDCT" 11TH DIGITAL SIGNAL PROCESSING WORKSHOP, TAOS SKI VALLEY, NEW MEXICO, USA, [Online] 1. August 2004 (2004-08-01), - 4. August 2004 (2004-08-04) Seiten 356-360, XP002316469 Gefunden im Internet: URL:http://www.idmt.fraunhofer.de/abteilun gen_gruppen/schuller/dspws04.pdf> [gefunden am 2005-02-04]**
- **GEIGER R ET AL: "Fine grain scalable perceptual and lossless audio coding based on INTMDCT" 2003 IEEE INTERNATIONAL CONFERENCE ON ACOUSTICS, SPEECH, AND SIGNAL PROCESSING. PROCEEDINGS. (ICASSP). HONG KONG, APRIL 6 - 10, 2003, IEEE INTERNATIONAL CONFERENCE ON ACOUSTICS, SPEECH, AND SIGNAL PROCESSING (ICASSP), NEW YORK, NY : IEEE, US, 6. April 2003 (2003-04-06), Seiten V445-V448, XP010639304 ISBN: 0-7803-7663-3**
- **DE KONING D ET AL: "On psychoacoustic noise shaping for audio requantization" 2003 IEEE INTERNATIONAL CONFERENCE ON ACOUSTICS, SPEECH, AND SIGNAL PROCESSING (CAT. NO.03CH37404) IEEE PISCATAWAY, NJ, USA, 6. April 2003 (2003-04-06), Seiten V453-V456, XP002316470 ISBN: 0-7803-7663-3**

EP 1 647 009 B1

- GEIGER R ET AL: "INTMDCT-A LINK BETWEEN PERCEPTUAL AND LOSSLESS AUDIO CODING" 2002 IEEE INTERNATIONAL CONFERENCE ON ACOUSTICS, SPEECH, AND SIGNAL PROCESSING. PROCEEDINGS. (ICASSP). ORLANDO, FL, MAY 13 - 17, 2002, IEEE INTERNATIONAL CONFERENCE ON ACOUSTICS, SPEECH, AND SIGNAL PROCESSING (ICASSP), NEW YORK, NY : IEEE, US, 13. Mai 2002 (2002-05-13), Seiten II1813-II1816, XP001097166 ISBN: 0-7803-7402-9

**Beschreibung**

Die vorliegende Erfindung bezieht sich auf die Signalverarbeitung und insbesondere auf die Signalverarbeitung von sequentiell vorliegenden Werten, wie beispielsweise Audioabtastwerten oder Videoabtastwerten, welche insbesondere für verlustlose, d. h. lossless, Codieranwendungen besonders geeignet ist.

Die vorliegende Erfindung eignet sich ferner für Kompressionsalgorithmen für diskrete Werte, die Audio- und/oder Bildinformationen aufweisen, und insbesondere für Codieralgorithmen, die eine Transformation in den Frequenzbereich oder Zeitbereich oder Ortsbereich umfassen, denen eine Codierung, wie beispielsweise eine Entropiecodierung in Form einer Huffman- oder arithmetischen Codierung nachgeschaltet ist.

Moderne Audiocodierverfahren, wie z. B. MPEG Layer3 (MP3) oder MPEG AAC verwenden Transformationen wie beispielsweise die sogenannte modifizierte diskrete Cosinustransformation (MDCT), um eine blockweise Frequenzdarstellung eines Audiosignals zu erhalten. Ein solcher Audiocodierer erhält üblicherweise einen Strom von zeitdiskreten Audio-Abtastwerten. Der Strom von Audio-Abtastwerten wird gefenstert, um einen gefensterten Block von beispielsweise 1024 oder 2048 gefensterten Audio-Abtastwerten zu erhalten. Zur Fensterung werden verschiedene Fensterfunktionen eingesetzt, wie z. B. ein Sinus-Fenster, etc.

Die gefensterten zeitdiskreten Audio-Abtastwerte werden dann mittels einer Filterbank in eine spektrale Darstellung umgesetzt. Prinzipiell kann hierzu eine Fourier-Transformation, oder aus speziellen Gründen eine Abart der Fourier-Transformation, wie z. B. eine FFT oder, wie es ausgeführt worden ist, eine MDCT eingesetzt werden. Der Block von Audio-Spektralwerten am Ausgang der Filterbank kann dann je nach Bedarf weiter verarbeitet werden. Bei den oben bezeichneten Audio-Codierern folgt eine Quantisierung der Audio-Spektralwerte, wobei die Quantisierungsstufen typischerweise so gewählt werden, daß das durch das Quantisieren eingeführt Quantisierungsrauschen unterhalb der psychoakustischen Maskierungsschwelle liegt, d. h. "wegmaskiert" wird. Die Quantisierung ist eine verlustbehaftete Codierung. Um eine weitere Datenmengenreduktion zu erhalten, werden die quantisierten Spektralwerte anschließend beispielsweise mittels einer Huffman-Codierung Entropie-codiert. Durch Hinzufügen von Seiteninformationen, wie z. B. Skalenfaktoren etc. wird aus den Entropie-codierten quantisierten Spektralwerten mittels eines Bitstrom-Multiplexers ein Bitstrom gebildet, der gespeichert oder übertragen werden kann.

Im Audio-Decodierer wird der Bitstrom mittels eines Bitstrom-Demultiplexers in codierte quantisierte Spektralwerte und Seiteninformationen aufgeteilt. Die Entropie-codierten quantisierten Spektralwerte werden zunächst Entropiedecodiert, um die quantisierten Spektralwerte zu erhalten. Die quantisierten Spektralwerte werden dann invers quantisiert, um decodierte Spektralwerte zu erhalten, die Quantisierungsrauschen aufweisen, das jedoch unterhalb der psychoakustischen Maskierungsschwelle liegt und daher unhörbar sein wird. Diese Spektralwerte werden dann mittels einer Synthese-Filterbank in eine zeitliche Darstellung umgesetzt, um zeitdiskrete decodierte Audio-Abtastwerte zu erhalten. In der Synthese-Filterbank muß ein zum Transformations-Algorithmus inverser Transformations-Algorithmus eingesetzt werden. Außerdem muß nach der Frequenz-Zeit-Rücktransformation das Fenstern rückgängig gemacht werden.

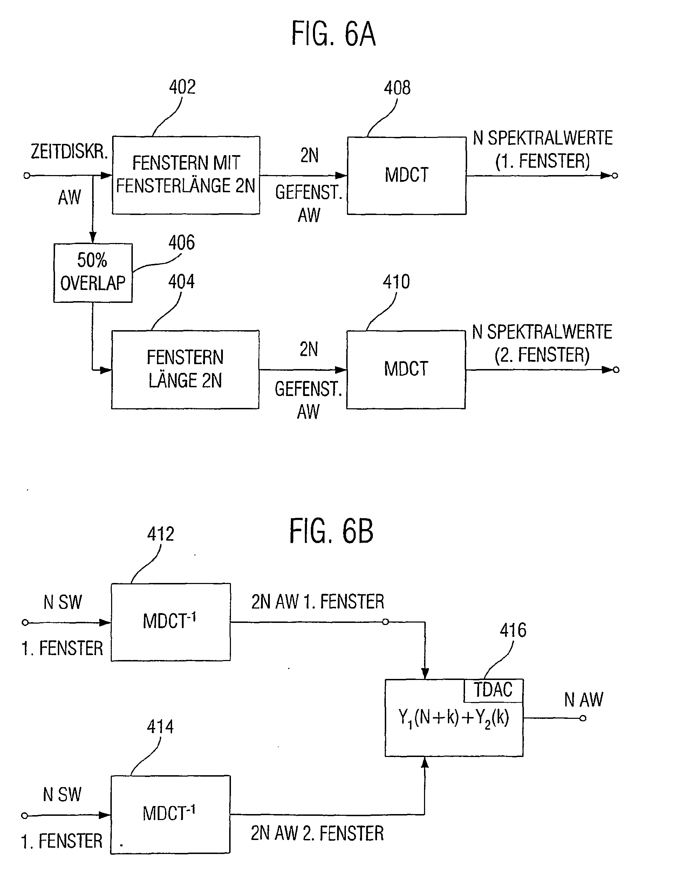

Um eine gute Frequenzselektivität zu erreichen, verwenden moderne Audio-Codierer typischerweise eine BlockÜberlappung. Ein solcher Fall ist in Fig. 6a dargestellt. Zunächst werden beispielsweise 2048 zeitdiskrete Audio-Abtastwerte genommen und mittels einer Einrichtung 402 gefenstert. Das Fenster, das die Einrichtung 402 verkörpert, hat eine Fensterlänge von 2N Abtastwerten und liefert ausgangsseitig einen Block von 2N gefensterten Abtastwerten. Um eine Fensterüberlappung zu erreichen, wird mittels einer Einrichtung 404, die lediglich aus Übersichtlichkeitsgründen in Fig. 6a getrennt von der Einrichtung 402 dargestellt ist, ein zweiter Block von 2N gefensterten Abtastwerten gebildet. Die in die Einrichtung 404 eingespeisten 2048 Abtastwerte sind jedoch nicht die an das erste Fenster unmittelbar anschließenden zeitdiskreten Audio-Abtastwerte, sondern beinhalten die zweite Hälfte der durch die Einrichtung 402 gefensterten Abtastwerte und beinhalten zusätzlich lediglich 1024 "neue" Abtastwerte. Die Überlappung ist durch eine Einrichtung 406 in Fig. 6a symbolisch dargestellt, die einen Überlappungsgrad von 50% bewirkt. Sowohl die durch die Einrichtung 402 ausgegebenen 2N gefensterten Abtastwerte als auch die durch die Einrichtung 404 ausgegebenen 2N gefensterten Abtastwerte werden dann mittels einer Einrichtung 408 bzw. 410 dem MDCT-Algorithmus unterzogen. Die Einrichtung 408 liefert gemäß dem bekannten MDCT-Algorithmus N Spektralwerte für das erste Fenster, während die Einrichtung 410 ebenfalls N Spektralwerte liefert, jedoch für das zweite Fenster, wobei zwischen dem ersten Fenster und dem zweiten Fenster eine Überlappung von 50% besteht.

Im Decodierer werden die N Spektralwerte des ersten Fensters, wie es in Fig. 6b gezeigt ist, einer Einrichtung 412, die eine inverse modifizierte diskrete Cosinustransformation durchführt, zugeführt. Dasselbe gilt für die N Spektralwerte des zweiten Fensters. Diese werden einer Einrichtung 414 zugeführt, die ebenfalls eine inverse modifizierte diskrete Cosinustransformation durchführt. Sowohl die Einrichtung 412 als auch die Einrichtung 414 liefern jeweils 2N Abtastwerte für das erste Fenster bzw. 2N Abtastwerte für das zweite Fenster.

In einer Einrichtung 416, die in Fig. 6b mit TDAC (TDAC = Time Domain Aliasing Cancellation) bezeichnet ist, wird die Tatsache berücksichtigt, daß die beiden Fenster überlappend sind. Insbesondere wird ein Abtastwert $y_1$ der zweiten Hälfte des ersten Fensters, also mit einem Index N+k, mit einem Abtastwert $y_2$ aus der ersten Hälfte des zweiten Fensters, also mit einem Index k summiert, so daß sich ausgangsseitig, also im Decodierer, N decodierte zeitliche Abtastwerte ergeben.

Es sei darauf hingewiesen, daß durch die Funktion der Einrichtung 416, die auch als Add-Funktion bezeichnet wird, die in dem durch Fig. 6a schematisch dargestellten Codierer durchgeführte Fensterung gewissermaßen automatisch berücksichtigt wird, so daß in dem durch Fig. 6b dargestellten Decodierer keine explizite "inverse Fensterung" stattzufinden hat.

Wenn die durch die Einrichtung 402 oder 404 implementierte Fensterfunktion mit w(k) bezeichnet wird, wobei der Index k den Zeitindex darstellt, bezeichnet wird, so muß die Bedingung erfüllt sein, daß das Fenstergewicht w(k) im Quadrat addiert zu dem Fenstergewicht w(N+k) im Quadrat zusammen 1 ergibt, wobei k von 0 bis N-1 läuft. Wenn ein Sinus-Fenster verwendet wird, dessen Fenster-Gewichtungen der ersten Halbwelle der Sinus-Funktion folgen, so ist diese Bedingung immer erfüllt, da das Quadrat des Sinus und das Quadrat des Cosinus für jeden Winkel zusammen den Wert 1 ergeben.

Nachteilig an dem in Fig. 6a beschriebenen Fenster-Verfahren mit anschließender MDCT-Funktion ist die Tatsache, daß die Fensterung durch Multiplikation eines zeitdiskreten Abtastwerts, wenn an ein Sinus-Fenster gedacht wird, mit einer Gleitkommazahl erreicht wird, da der Sinus eines Winkels zwischen 0 und 180 Grad abgesehen von dem Winkel 90 Grad keine Ganzzahl ergibt. Auch wenn ganzzahlige zeitdiskrete Abtastwerte gefenstert werden, entstehen nach dem Fenstern also Gleitkommazahlen.

Daher ist, auch wenn kein psychoakustischer Codierer verwendet wird, d. h. wenn eine verlustlose Codierung erreicht werden soll, am Ausgang der Einrichtungen 408 bzw. 410 eine Quantisierung notwendig, um eine einigermaßen überschaubare Entropie-Codierung durchführen zu können.

Allgemein gesagt erhält man gegenwärtig bekannte Ganzzahltransformationen für ein verlustloses Audio- und/ oder Videocodieren durch eine Zerlegung der dort verwendeten Transformationen in Givens-Rotationen und durch Anwenden des Lifting-Schemas auf jede Givens-Rotation. Dadurch wird in jedem Schritt ein Rundungsfehler eingeführt. Für nachfolgende Stufen von Givens-Rotationen akkumuliert sich der Rundungsfehler immer mehr. Der resultierende Approximationsfehler wird insbesondere für verlustlose Audiocodieransätze problematisch, insbesondere wenn lange Transformationen verwendet werden, die beispielsweise 1.024 Spektralwerte liefern, wie es beispielsweise bei der bekannten MDCT mit Overlap and Add (MDCT = modifizierte diskrete Kosinustransformation) der Fall ist. Insbesondere im höherfrequenten Bereich, wo das Audiosignal ohnehin typischerweise eine sehr kleine Energiemenge hat, kann der Approximationsfehler schnell größer als das tatsächliche Signal werden, so daß diese Ansätze im Hinblick auf das verlustlose Codieren und insbesondere im Hinblick auf die dabei erreichbare Codiereffizienz problematisch ist.

Ganzzahlige Transformationen, also Transformationsalgorithmen, die ganzzahlige Ausgangswerte erzeugen, basieren im Hinblick auf die Audiocodierung besonders auf der bekannten DCT-IV, welche keinen Gleichanteil berücksichtigt, während ganzzahlige Transformationen für Bildanwendungen eher auf der DCT-II basieren, welche speziell die Vorkehrungen für den Gleichanteil beinhaltet. Solche ganzzahligen Transformationen sind beispielsweise in Y. Zeng, G. Bi und Z. Lin, "Integer sinusoidal transforms based on lifting factorization", in Proc. ICASSP'01, Mai 2001, S. 1.181 - 1.184, K. Komatsu und K. Sezaki, "Reversible Discrete Cosine Transform", in Proc. ICASSP, 1998, Bd. 3, S. 1.769 - 1.772, P. Hao und Q. Shi, "Matrix factorizations for reversible integer mapping", IEEE Trans. Signal Processing, Signal Processing, Bd. 49, S. 2.314 - 2.324, und J. Wang, J. Sun und S. Yu, "1-d and 2-d transforms from integers to integers", in Proc. ICASSP'03, Hongkong, April 2003, bekannt.

Wie es ausgeführt worden ist, basieren die dort beschriebenen Ganzzahltransformationen auf der Zerlegung der Transformation in Givens-Rotationen und auf der Anwendung des bekannten Lifting-Schemas auf die Givens-Rotationen, was die Problematik der akkumulierenden Rundungsfehler mit sich bringt. Dies liegt insbesondere daran, daß innerhalb einer Transformation viele Male gerundet werden muß, d. h. nach jedem Lifting-Schritt, so daß besonders bei langen Transformationen, die entsprechend viele Lifting-Schritte mit sich bringen, besonders häufig gerundet werden muß. Wie ausgeführt, resultiert dies in einem akkumulierten Fehler und insbesondere auch in einer relativ aufwendigen Verarbeitung, da immer nach jedem Lifting-Schritt gerundet wird, um den nächsten Lifting-Schritt auszuführen.

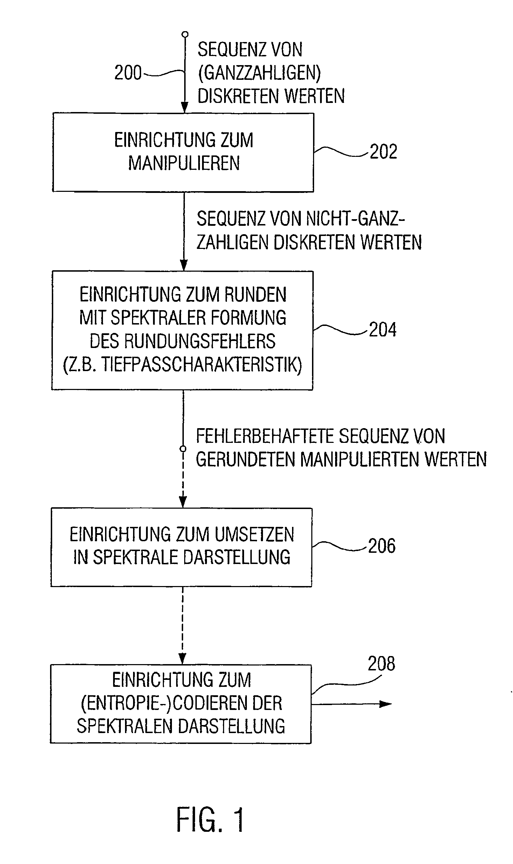

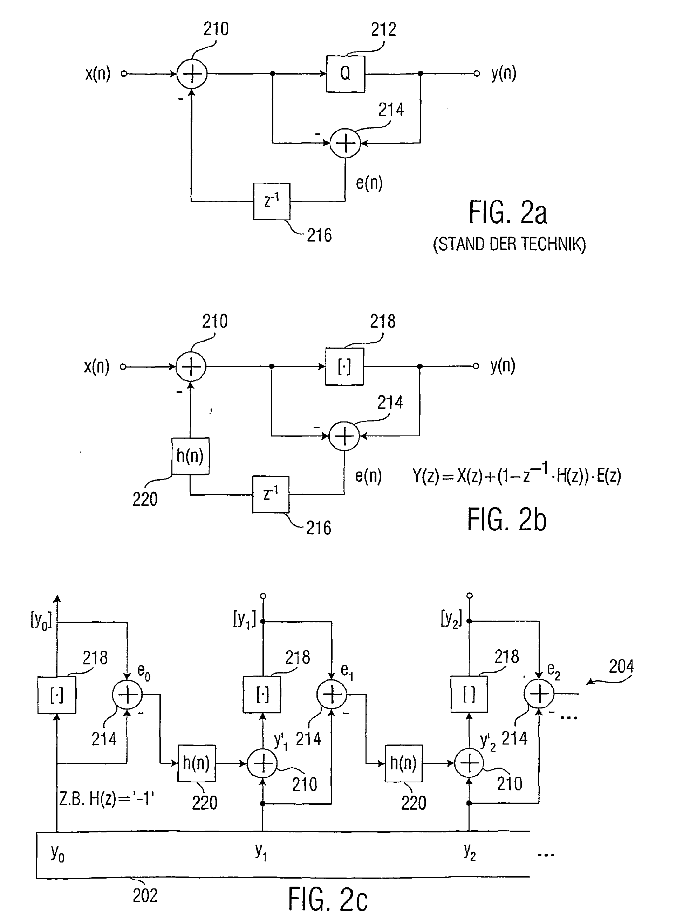

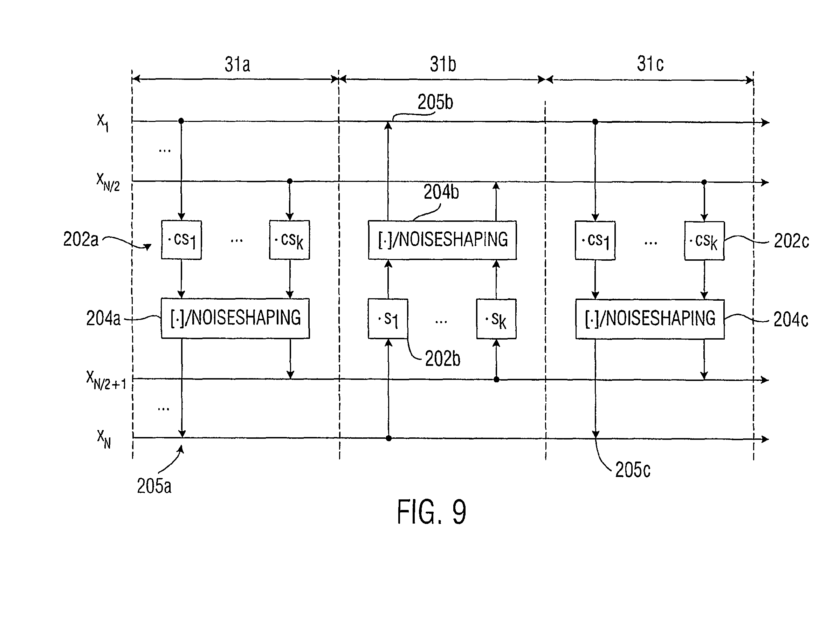

Nachfolgend wird Bezug nehmend auf die Fig. 9 - 11 die Zerlegung der MDCT-Fensterung noch einmal dargestellt, wie sie in der DE 10129240 A1 beschrieben ist, wobei diese Zerlegung der MDCT-Fensterung in Givens-Rotationen mit Lifting-Matrizen und entsprechenden Rundungen vorteilhafterweise mit dem in Fig. 1 für die Umsetzung und Fig. 2 für die inverse Umsetzung dargelegten Konzept kombinierbar ist, um eine komplette ganzzahlige MDCT-Approximation, also eine Integer-MDCT (IntMDCT) gemäß der vorliegenden Erfindung zu erhalten, wobei sowohl ein Hin- als auch ein Rück-Transformationskonzept am Beispiel einer MDCT ausgeführt ist, siehe auch Geiger R et al: "IntMDCT - a link between perceptual and lossless audio coding", IEEE ICASSP 2002.

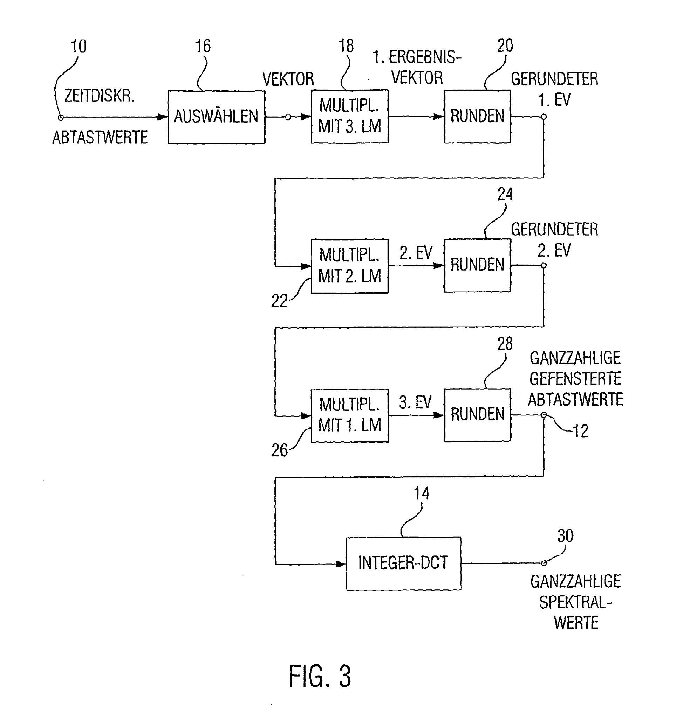

Fig. 3 zeigt ein Übersichtsdiagramm für die erfindungsgemäß bevorzugte Vorrichtung zum Verarbeiten von zeitdiskreten Abtastwerten, die ein Audiosignal darstellen, um ganzzahlige Werte zu erhalten, auf denen aufbauend der Int-MDCT-Ganzzahl-Transformationsalgorithmus arbeitet. Die zeitdiskreten Abtastwerte werden durch die in Fig. 3 gezeigte Vorrichtung gefenstert und optional in eine spektrale Darstellung umgesetzt. Die zeitdiskreten Abtastwerte, die an einem Eingang 10 in die Vorrichtung eingespeist werden, werden mit einem Fenster w mit einer Länge, die 2N zeitdiskreten Abtastwerten entspricht, gefenstert, um an einem Ausgang 12 ganzzahlige gefensterte Abtastwerte zu erreichen, welche dazu geeignet sind, um mittels einer Transformation und insbesondere der Einrichtung 14 zum Ausführen einer ganzzahligen DCT in eine spektrale Darstellung umgesetzt zu werden. Die ganzzahlige DCT ist ausgebildet, um aus N Eingangswerten N Ausgangswerte zu erzeugen, was im Gegensatz zu der MDCT-Funktion 408 von Fig. 6a steht, die aus 2N gefensterten Abtastwerten aufgrund der MDCT-Gleichung lediglich N Spektralwerte erzeugt.

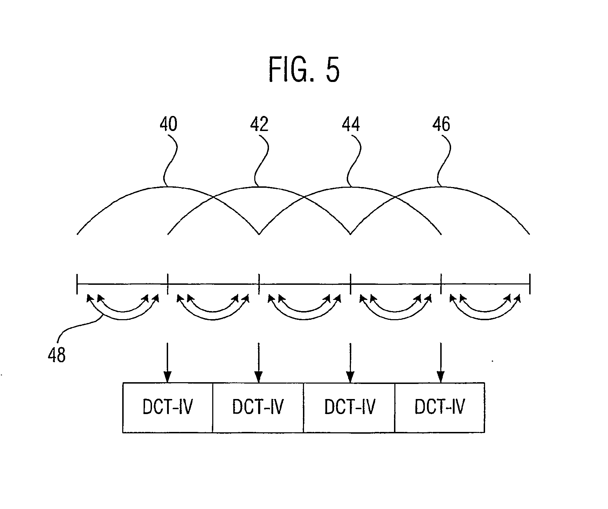

Zum Fenstern der zeitdiskreten Abtastwerte werden zunächst in einer Einrichtung 16 zwei zeitdiskrete Abtastwerte ausgewählt, die zusammen einen Vektor von zeitdiskreten Abtastwerten darstellen. Ein zeitdiskreter Abtastwert, der durch die Einrichtung 16 ausgewählt wird, liegt im ersten Viertel des Fensters. Der andere zeitdiskrete Abtastwert liegt in dem zweiten Viertel des Fensters, wie es anhand von Fig. 5 noch detaillierter ausgeführt wird. Der durch die Einrichtung 16 erzeugte Vektor wird nunmehr mit einer Drehmatrix der Dimension 2 x 2 beaufschlagt, wobei diese Operation nicht unmittelbar durchgeführt wird, sondern mittels mehrerer sogenannten Lifting-Matrizen.

Eine Lifting-Matrix hat die Eigenschaft, daß sie nur ein Element aufweist, das von dem Fenster w abhängt und ungleich "1" oder "0" ist.

Die Faktorisierung von Wavelet-Transformationen in Lifting-Schritte ist in der Fachveröffentlichung "Factoring Wavelet Transforms Into Lifting Steps", Ingrid Daubechies und Wim Sweldens, Preprint, Bell Laboratories, Lucent Technologies, 1996, dargestellt. Allgemein ist ein Lifting-Schema eine einfache Beziehung zwischen perfekt rekonstruierenden Filterpaaren, die dasselbe Tiefpaß- oder Hochpaßfilter haben. Jedes Paar komplementärer Filter kann in Lifting-Schritte faktorisiert werden. Insbesondere gilt dies für Givens-Rotationen. Es sei der Fall betrachtet, bei dem die Polyphasenmatrix eine Givens-Rotation ist. Es gilt dann:

$$\begin{pmatrix} \cos\alpha & -\sin\alpha \\ \sin\alpha & \cos\alpha \end{pmatrix} = \begin{pmatrix} 1 & \frac{\cos\alpha-1}{\sin\alpha} \\ 0 & 1 \end{pmatrix} \begin{pmatrix} 1 & 0 \\ \sin\alpha & 1 \end{pmatrix} \begin{pmatrix} 1 & \frac{\cos\alpha-1}{\sin\alpha} \\ 0 & 1 \end{pmatrix} \qquad (1)$$

Jede der drei rechts des Gleichheitszeichens stehenden Lifting-Matrizen hat als Hauptdiagonalelemente den Wert "1". Ferner ist in jeder Lifting-Matrix ein Nebendiagonalelement gleich 0, und ein Nebendiagonalelement vom Drehwinkel α abhängig.

Der Vektor wird nunmehr mit der dritten Lifting-Matrix, d. h. der Liftingmatrix ganz rechts in obiger Gleichung, multipliziert, um einen ersten Ergebnisvektor zu erhalten. Dies ist in Fig. 3 durch eine Einrichtung 18 dargestellt. Es wird nunmehr der erste Ergebnisvektor mit einer beliebigen Rundungsfunktion, die die Menge der reellen Zahlen in die Menge der ganzen Zahlen abbildet, gerundet, wie es in Fig. 3 durch eine Einrichtung 20 dargestellt ist. Am Ausgang der Einrichtung 20 wird ein gerundeter erster Ergebnisvektor erhalten. Der gerundete erste Ergebnisvektor wird nunmehr in eine Einrichtung 22 zum Multiplizieren desselben mit der mittleren, d. h. zweiten, Lifting-Matrix eingespeist, um einen zweiten Ergebnisvektor zu erhalten, der in einer Einrichtung 24 wiederum gerundet wird, um einen gerundeten zweiten Ergebnisvektor zu erhalten. Der gerundete zweite Ergebnisvektor wird nunmehr in eine Einrichtung 26 eingespeist, und zwar zum Multiplizieren desselben mit der links in der obigen Gleichung aufgeführten, d. h. ersten, Liftingmatrix, um einen dritten Ergebnisvektor zu erhalten, der schließlich noch mittels einer Einrichtung 28 gerundet wird, um schließlich an dem Ausgang 12 ganzzahlige gefensterte Abtastwerte zu erhalten, die nun, wenn eine spektrale Darstellung derselben gewünscht wird, durch die Einrichtung 14 verarbeitet werden müssen, um an einem Spektralausgang 30 ganzzahlige Spektralwerte zu erhalten.

Vorzugsweise ist die Einrichtung 14 als Ganzzahl-DCT oder Integer-DCT ausgeführt.

Die diskrete Cosinus-Transformation gemäß Typ 4 (DCT-IV) mit einer Länge N ist durch folgende Gleichung gegeben:

$$X_t(m) = \sqrt{\frac{2}{N}} \sum_{k=0}^{N-1} x(k) \cos\left( \frac{\pi}{4N}(2k+1)(2m+1) \right) \qquad (2)$$

Die Koeffizienten der DCT-IV bilden eine orthonormale N x N Matrix. Jede orthogonale N x N-Matrix kann in N (N-1)/2 Givens-Rotationen zerlegt werden, wie es in der Fachveröffentlichung P. P. Vaidyanathan, "Multirate Systems And Filter Banks", Prentice Hall, Englewood Cliffs, 1993, ausgeführt ist. Es sei darauf hingewiesen, daß auch weitere Zerlegungen existieren.

Bezüglich der Klassifikationen der verschiedenen DCT-Algorithmen sei auf H. S. Malvar, "Signal Processing With Lapped Transforms", Artech House, 1992, verwiesen. Allgemein unterscheiden sich die DCT-Algorithmen durch die Art ihrer Basisfunktionen. Während die DCT-IV, die hier bevorzugt wird, nicht-symmetrische Basisfunktionen umfaßt, d. h. eine Cosinus-Viertelwelle, eine Cosinus-3/4-Welle, eine Cosinus-5/4-Welle, eine Cosinus-7/4-Welle, etc., hat die diskrete Cosinustransformation z. B. vom Typ II (DCT-II), achsensymmetrische und punktsymmetrische Basisfunktionen. Die 0-te Basisfunktion hat einen Gleichanteil, die erste Basisfunktion ist eine halbe Cosinuswelle, die zweite Basisfunktion ist eine ganze Cosinuswelle, usw. Aufgrund der Tatsache, daß die DCT-II den Gleichanteil besonders berücksichtigt, wird sie bei der Videocodierung verwendet, nicht aber bei der Audiocodierung, da bei der Audiocodierung im Gegensatz zur Videocodierung der Gleichanteil nicht von Relevanz ist.

Im nachfolgend wird darauf eingegangen, wie der Drehwinkel $\alpha$ der Givens-Rotation von der Fensterfunktion abhängt.

Eine MDCT mit einer Fensterlänge von 2N kann in eine diskrete Cosinustransformation vom Typ IV mit einer Länge N reduziert werden. Dies wird dadurch erreicht, daß die TDAC-Operation explizit im Zeitbereich durchgeführt wird, und daß dann die DCT-IV angewandt wird. Bei einer 50%igen Überlappung überlappt die linke Hälfte des Fensters für einen Block t mit der rechten Hälfte des vorausgehenden Blocks, d. h. des Blocks t-1. Der überlappende Teil zwei aufeinanderfolgender Blöcke t-1 und t wird im Zeitbereich, d. h. vor der Transformation, folgendermaßen vorverarbeitet, d. h. zwischen dem Eingang 10 und dem Ausgang 12 von Fig. 3 verarbeitet:

$$\begin{pmatrix} \widetilde{x}_t(k) \\ \widetilde{x}_{t-1}(N-1-k) \end{pmatrix} = \begin{pmatrix} w\left(\frac{N}{2}+k\right) & -w\left(\frac{N}{2}-1-k\right) \\ w\left(\frac{N}{2}-1-k\right) & w\left(\frac{N}{2}+k\right) \end{pmatrix} \begin{pmatrix} x_t\left(\frac{N}{2}+k\right) \\ x_t\left(\frac{N}{2}-1-k\right) \end{pmatrix} \qquad (3)$$

Die mit der Tilde bezeichneten Werte sind die Werte am Ausgang 12 von Fig. 3, während die ohne Tilde in der obigen Gleichung bezeichnete x Werte die Werte am Eingang 10 bzw. hinter der Einrichtung 16 zum Auswählen sind. Der Laufindex k läuft von 0 bis N/2-1, während w die Fensterfunktion darstellt.

Aus der TDAC-Bedingung für die Fensterfunktion w gilt folgender Zusammenhang:

$$w\left(\frac{N}{2}+k\right)^2 + w\left(\frac{N}{2}-1-k\right)^2 = 1 \qquad (4)$$

Für bestimmte Winkel $\alpha_k$, k = 0, ..., N/2-1 kann diese Vorverarbeitung im Zeitbereich als Givens-Rotation geschrieben werden, wie es ausgeführt worden ist.

Der Winkel $\alpha$ der Givens-Rotation hängt folgendermaßen von der Fensterfunktion w ab:

$$\alpha = \arctan[w(N/2-1-k) \ / \ w(N/2 + k)] \qquad (5)$$

Es sei darauf hingewiesen, daß beliebige Fensterfunktionen w eingesetzt werden können, solange sie diese TDAC-Bedingung erfüllen.

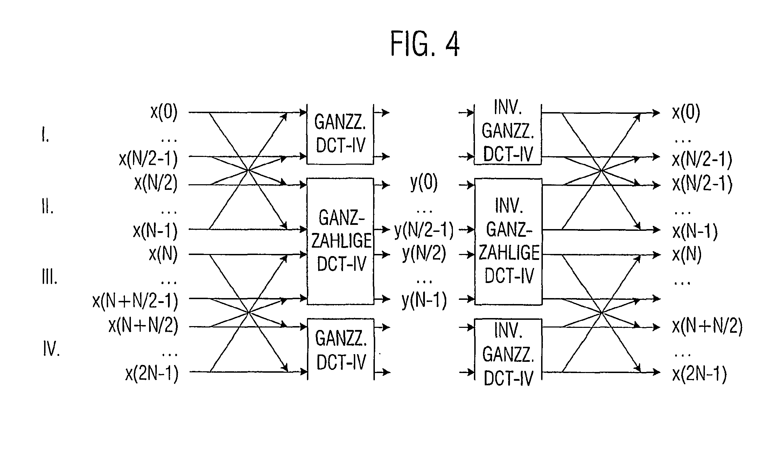

Im nachfolgenden wird anhand von Fig. 4 ein kaskadierter Codierer und Decodierer beschrieben. Die zeitdiskreten Abtastwerte x(0) bis x(2N-1), die durch ein Fenster gemeinsam "gefenstert" werden, werden zunächst derart durch die Einrichtung 16 von Fig. 3 ausgewählt, daß der Abtastwert x(0) und der Abtastwert x(N-1), d. h. ein Abtastwert aus dem ersten Viertel des Fensters und ein Abtastwert aus dem zweiten Viertel des Fensters, ausgewählt werden, um den Vektor am Ausgang der Einrichtung 16 zu bilden. Die sich überkreuzenden Pfeile stellen schematisch die Lifting-Multiplikationen und anschließenden Rundungen der Einrichtungen 18, 20 bzw. 22, 24 bzw. 26, 28 dar, um am Eingang der DCT-IV-Blöcke die ganzzahligen gefensterten Abtastwerte zu erhalten.

Wenn der erste Vektor wie oben beschrieben verarbeitet ist, wird ferner ein zweiter Vektor aus den Abtastwerten x(N/2-1) und x(N/2), d. h. wieder ein Abtastwert aus dem ersten Viertel des Fenster und ein Abtastwert aus dem zweiten Viertel des Fensters, ausgewählt und wiederum durch den in Fig. 3 beschriebenen Algorithmus verarbeitet. Analog dazu werden sämtliche anderen Abtastwertpaare aus dem ersten und zweiten Viertel des Fensters bearbeitet. Die selbe Verarbeitung wird für das dritte und vierte Viertel des ersten Fensters durchgeführt. Nunmehr liegen am Ausgang 12 2N gefensterte ganzzahlige Abtastwerte vor, die nunmehr so, wie es in Fig. 4 dargestellt ist, in eine DCT-IV-Transformation eingespeist werden. Insbesondere werden die ganzzahligen gefensterten Abtastwerte des zweiten und dritten Viertels in eine DCT eingespeist. Die gefensterten ganzzahligen Abtastwerte des ersten Viertels des Fensters werden in eine vorausgehende DCT-IV zusammen mit den gefensterten ganzzahligen Abtastwerten des vierten Viertels des vorausgehenden Fensters verarbeitet. Analog dazu wird das vierte Viertel der gefensterten ganzzahligen Abtastwerte in Fig. 4 mit dem ersten Viertel des nächsten Fensters zusammen in eine DCT-IV-Transformation eingespeist. Die mittlere in Fig. 4 gezeigte ganzzahlige DCT-IV-Transformation 32 liefert nunmehr N ganzzahlige Spektralwerte y(0) bis y(N-1). Diese ganzzahligen Spektralwerte können nunmehr beispielsweise einfach Entropie-codiert werden, ohne daß eine dazwischenliegende Quantisierung erforderlich ist, da die Fensterung und Transformation ganzzahlige Ausgangswerte liefert.

In der rechten Hälfte von Fig. 4 ist ein Decodierer dargestellt. Der Decodierer bestehend aus Rücktransformation und "inverser Fensterung" arbeitet invers zum Codierer. Es ist bekannt, daß zur Rücktransformation einer DCT-IV eine inverse DCT-IV verwendet werden kann, wie es in Fig. 4 dargestellt ist. Die Ausgangswerte der Decodierer-DCT-IV 34 werden nunmehr, wie es in Fig. 4 dargestellt ist, mit den entsprechenden Werten der vorausgehenden Transformation bzw. der nachfolgenden Transformation invers verarbeitet, um aus den ganzzahligen gefensterten Abtastwerten am Ausgang der Einrichtung 34 bzw. der vorausgehenden und nachfolgenden Transformation wieder zeitdiskrete Audio-Abtastwerte x(0) bis x(2N-1) zu erzeugen.

Die ausgangsseitige Operation geschieht durch eine inverse Givens-Rotation, d. h. derart, daß die Blöcke 26, 28 bzw. 22, 24 bzw. 18, 20 in der entgegengesetzten Richtung durchlaufen werden. Dies sei anhand der zweiten Lifting-Matrix von Gleichung 1 näher dargestellt. Wenn (im Codierer) der zweite Ergebnisvektor durch Multiplikation des gerundeten ersten Ergebnisvektors mit der zweiten Liftingmatrix (Einrichtung 22) gebildet wird, so ergibt sich folgender Ausdruck:

$$(x, y) \mapsto (x, y + x \sin \alpha) \qquad (6)$$

Die Werte x, y auf der rechten Seite von Gleichung 6 sind Ganzzahlen. Dies trifft jedoch für den Wert $x \sin \alpha$ nicht zu. Hier muß die Rundungsfunktion r eingeführt werden, wie es in der nachfolgenden Gleichung

$$(x, y) \mapsto (x, y + r(x \sin \alpha)) \qquad (7)$$

dargestellt ist. Diese Operation führt die Einrichtung 24 aus.

Die inverse Abbildung (im Decodierer) ist folgendermaßen definiert:

$$(x', y') \mapsto (x', y' - r(x' \sin \alpha)) \qquad (8)$$

Aufgrund dem Minuszeichen vor der Rundungsoperation wird ersichtlich, daß die ganzzahlige Approximierung des Lifting-Schritts umgekehrt werden kann, ohne daß ein Fehler eingeführt wird. Die Anwendung dieser Approximation auf jeden der drei Lifting-Schritte führt zu einer ganzzahligen Approximation der Givens-Rotation. Die gerundete Rotation (im Codierer) kann umgekehrt werden (im Decodierer), ohne daß ein Fehler eingeführt wird, und zwar indem die inversen gerundeten Lifting-Schritte in umgekehrter Reihenfolge durchlaufen werden, d. h. wenn beim Decodieren der Algorithmus von Fig. 3 von unten nach oben durchgeführt wird.

Wenn die Rundungsfunktion r punktsymmetrisch ist, ist die inverse gerundete Rotation identisch zu der gerundeten Rotation mit dem Winkel -$\alpha$ und lautet folgendermaßen:

$$\begin{pmatrix} \cos \alpha & \sin \alpha \\ -\sin \alpha & \cos \alpha \end{pmatrix} \qquad (9)$$

Die Lifting-Matrizen für den Decodierer, d. h. für die inverse Givens-Rotation, ergibt sich in diesem Fall unmittelbar aus Gleichung (1), indem lediglich der Ausdruck "sin $\alpha$" durch den Ausdruck "-sin $\alpha$" ersetzt wird.

Im nachfolgenden wird anhand von Fig. 5 noch einmal die Zerlegung einer üblichen MDCT mit überlappenden Fenstern 40 bis 46 dargelegt. Die Fenster 40 bis 46 überlappen jeweils zu 50%. Pro Fenster werden zunächst Givens-Rotationen innerhalb des ersten und zweiten Viertels eines Fensters bzw. innerhalb des dritten und vierten Viertels eines Fensters ausgeführt, wie es durch die Pfeile 48 schematisch dargestellt ist. Dann werden die rotierten Werte, d.

h. die gefensterten ganzzahligen Abtastwerte derart in eine N-zu-N-DCT eingespeist, daß immer das zweite und dritte Viertel eines Fensters bzw. das vierte und erste Viertel eines darauffolgenden Fensters gemeinsam mittels eines DCT-IV-Algorithmus in eine spektrale Darstellung umgesetzt wird.

Es werden daher die üblichen Givens-Rotation in Lifting-Matrizen zerlegt, die sequentiell ausgeführt werden, wobei nach jeder Lifting-Matrix-Multiplikation ein Rundungsschritt eingeführt wird, derart, daß die Gleitkomma-Zahlen unmittelbar nach ihrer Entstehung gerundet werden, derart, daß vor jeder Multiplikation eines Ergebnisvektors mit einer Lifting-Matrix der Ergebnisvektor lediglich Ganzzahlen hat.

Die Ausgangswerte bleiben also immer ganzzahlig, wobei es bevorzugt wird, auch ganzzahlige Eingangswerte zu verwenden. Dies stellt keine Einschränkung dar, da jegliche beispielsweise PCM-Abtastwerte, wie sie auf einer CD abgespeichert sind, ganzzahlige Zahlenwerte sind, deren Wertebereich je nach Bitbreite variiert, d. h. abhängig davon, ob die zeitdiskreten digitalen Eingangswerte 16-Bit-Werte oder 24-Bit-Werte sind. Dennoch ist, wie es ausgeführt worden ist, der gesamte Prozeß invertierbar, indem die inversen Rotationen in umgekehrter Reihenfolge ausgeführt werden. Es existiert somit eine ganzzahlige Approximation der MDCT mit perfekter Rekonstruktion, also eine verlustlose Transformation.

Die gezeigte Transformation liefert ganzzahlige Ausgangswerte statt Gleitkommawerte. Sie liefert eine perfekte Rekonstruktion, so daß kein Fehler eingeführt wird, wenn eine Vorwärts- und dann eine Rückwärtstransformation ausgeführt werden. Die Transformation ist gemäß einem bevorzugten Ausführungsbeispiel der vorliegenden Erfindung ein Ersatz für die modifizierte diskrete Cosinustransformation. Auch andere Transformationsverfahren können jedoch ganzzahlig ausgeführt werden, so lange eine Zerlegung in Rotationen und eine Zerlegung der Rotationen in Lifting-Schritte möglich ist.

Die ganzzahlige MDCT hat die meisten günstigen Eigenschaften der MDCT. Sie hat eine überlappende Struktur, wodurch eine bessere Frequenzselektivität als bei nicht-überlappenden Blocktransformationen erhalten wird. Aufgrund der TDAC-Funktion, die bereits beim Fenstern vor der Transformation berücksichtigt wird, wird eine kritische Abtastung beibehalten, so daß die Gesamtanzahl von Spektralwerten, die ein Audiosignal darstellen, gleich der Gesamtanzahl von Eingangs-Abtastwerten ist.

Verglichen mit einer normalen MDCT, die Gleitkomma-Abtastwerte liefert, zeigt sich bei der beschriebenen bevorzugten ganzzahligen Transformation, daß lediglich in dem Spektralbereich, in dem wenig Signalpegel ist, das Rauschen im Vergleich zur normalen MDCT erhöht ist, während sich diese Rauscherhöhung bei signifikanten Signalpegeln nicht bemerkbar macht. Dafür bietet sich die ganzzahlige Verarbeitung für eine effiziente Hardware-Implementation an, da lediglich Multiplikationsschritte verwendet werden, die ohne weiteres in Verschieben-Addieren-Schritte (Shift/Add-Schritte) zerlegt werden können, welche einfach und schnell hardwaremäßig implementiert werden können. Selbstverständlich ist auch eine Software-Implementation möglich.

Die ganzzahlige Transformation liefert eine gute spektrale Darstellung des Audiosignals und bleibt dennoch im Bereich der ganzen Zahlen. Wenn sie auf tonale Teile eines Audiosignals angewandt wird, resultiert dies in einer guten Energiekonzentrierung. Damit kann ein effizientes verlustloses Codierschema aufgebaut werden, indem einfach die in Fig. 3 dargestellte Fensterung/Transformation mit einem Entropiecodierer kaskadiert wird. Insbesondere ein gestapeltes Codieren (Stacked Coding) unter Verwendung von Escape-Werten, wie es in MPEG AAC eingesetzt wird, ist günstig. Es wird bevorzugt, alle Werte um eine bestimmte Potenz von zwei herunterzuskalieren, bis sie in eine erwünschte Codetabelle passen, und dann die weggelassenen niederstwertigen Bits zusätzlich zu codieren. Im Vergleich zu der Alternative der Verwendung von größeren Codetabellen ist die beschriebene Alternative hinsichtlich des Speicherverbrauchs zum Speichern der Codetabellen günstiger. Ein nahezu verlustloser Codierer könnte auch dadurch erhalten werden, daß einfach bestimmte der niederstwertigen Bits weggelassen werden.

Insbesondere für tonale Signale ermöglicht eine Entropie-Codierung der ganzzahligen Spektralwerte einen hohen Codiergewinn. Für transiente Teile des Signals ist der Codiergewinn niedrig, und zwar aufgrund des flachen Spektrums transienter Signale, d. h. aufgrund einer geringen Anzahl von Spektralwerten, die gleich oder nahezu 0 sind. Wie es in J. Herre, J. D. Johnston: "Enhancing the Performance of Perceptual Audio Coders by Using Temporal Noise Shaping (TNS)" 101. AES Convention, Los Angeles, 1996, Preprint 4384, beschrieben ist, kann diese Flachheit jedoch verwendet werden, indem eine lineare Prädiktion im Frequenzbereich verwendet wird. Eine Alternative ist eine Prädiktion mit offener Schleife. Eine andere Alternative ist der Prädiktor mit geschlossener Schleife. Die erste Alternative, d. h. der Prädiktor mit offener Schleife, wird TNS genannt. Die Quantisierung nach der Prädiktion führt zu einer Adaption des resultierenden Quantisierungsrauschens an die zeitliche Struktur des Audiosignals und verhindert daher Vorechos in psychoakustischen Audiocodierern. Für ein verlustloses Audiocodieren ist die zweite Alternative, d. h. mit einem Prädiktor mit geschlossener Schleife, geeigneter, da die Prädiktion mit geschlossener Schleife eine genaue Rekonstruktion des Eingangssignals erlaubt. Wenn diese Technik auf ein erzeugtes Spektrum angewendet wird, muß ein Rundungsschritt nach jedem Schritt des Prädiktionsfilters durchgeführt werden, um im Bereich der Ganzzahlen zu bleiben. Durch Verwenden des inversen Filters und derselben Rundungsfunktion kann das ursprüngliche Spektrum genau wieder hergestellt werden.

Um die Redundanz zwischen zwei Kanälen zur Datenreduktion auszunutzen, kann auch eine Mitte-Seite-Codierung verlustlos eingesetzt werden, wenn eine gerundete Rotation mit einem Winkel $\pi/4$ verwendet wird. Im Vergleich zur Alternative des Berechnens der Summe und Differenz des linken und rechten Kanals eines Stereosignals hat die gerundete Rotation den Vorteil der Energieerhaltung. Die Verwendung sogenannter Joint-Stereo-Codiertechniken kann für jedes Band ein- oder ausgeschaltet werden, wie es auch im Standard MPEG AAC durchgeführt wird. Weitere Drehwinkel können ebenfalls berücksichtigt werden, um eine Redundanz zwischen zwei Kanälen flexibler reduzieren zu können.

Insbesondere das anhand von Fig. 3 dargestellte Transformationskonzept liefert eine ganzzahlige Implementierung der MDCT, also eine IntMDCT, die im Hinblick auf Hintransformation und anschließende Rücktransformation verlustlos arbeitet. Des weiteren ist durch die Rundungsschritte 20, 24, 28 und die entsprechenden Rundungsschritte in der Integer-DCT (Block 14 in Fig. 3) immer eine Ganzzahlverarbeitung möglich, also eine Verarbeitung mit gröber quantisierten Werten, als sie beispielsweise durch eine Gleitkommamultiplikation mit einer Lifting-Matrix entstanden sind (Blöcke 18, 22, 26 von Fig. 3).

Dies führt dazu, daß die ganze IntMDCT auch recheneffizient durchgeführt werden kann.

Die Verlustlosigkeit dieser IntMDCT bzw. allgemein gesagt die Verlustlosigkeit sämtlicher als verlustlos bezeichneten Codieralgorithmen bezieht sich darauf, daß das Signal, wenn es codiert wird, um ein codiertes Signal zu erreichen, und wenn es dann wieder decodiert wird, um ein codiertes/decodiertes Signal zu erreichen, genauso wie das ursprüngliche Signal "aussieht". In anderen Worten ausgedrückt ist das ursprüngliche Signal identisch zum codierten/ decodierten ursprünglichen Signal. Dies steht in deutlichem Gegensatz zu einer sogenannten verlustbehafteten Codierung, bei der, wie im Falle von Audiocodierern, die auf psychoakustischer Basis arbeiten, durch den Codierprozeß, und insbesondere durch den Quantisierprozeß, der von einem psychoakustischen Modell gesteuert wird, Daten unwiederbringlich verloren werden.

Selbstverständlich werden jedoch dennoch Rundungsfehler eingeführt. So werden, wie es anhand von Fig. 3 in den Blöcken 20, 24, 28 gezeigt ist, Rundungsschritte durchgeführt, die selbstverständlich einen Rundungsfehler einbringen, der erst im Decodierer, wenn die inversen Operationen ausgeführt werden, wieder "eliminiert" wird. So unterscheiden sich verlustlose Codier-/Decodierkonzepte grundsätzlich darin von verlustbehafteten Codier-/Decodierkonzepten, daß bei verlustlosen Codier-/Decodierkonzepten der Rundungsfehler so eingebracht wird, daß er wieder eliminiert werden kann, während dies bei verlustbehafteten Codier-/Decodierkonzepten nicht der Fall ist.

Wird jedoch das codierte Signal betrachtet, also am Beispiel von Transformationscodierern das Spektrum eines Blocks von zeitlichen Abtastwerten, so führt die Rundung bei der Hintransformation bzw. allgemein die Quantisierung eines solchen Signals dazu, daß ein Fehler in das Signal eingeführt wird. Damit wird dem idealen fehlerfreien Spektrum des Signals ein Rundungsfehler überlagert, der typischerweise z. B. im Fall von Fig. 3 ein weißes Rauschen ist, das sämtliche Frequenzanteile des betrachteten Spektralbereichs gleichermaßen umfaßt. Dieses dem idealen Spektrum überlagerte weiße Rauschen stellt somit den Rundungsfehler dar, der beispielsweise durch das Runden in den Blöcken 20, 24, 28 während des Fensterns, also des Vorverarbeitens des Signals vor der eigentlichen DCT im Block 14, gemacht wird. Es sei besonders darauf hingewiesen, daß für eine Verlustlosigkeitsanforderung der gesamte Rundungsfehler unbedingt codiert werden muß, also zum Decodierer übertragen werden muß, da der Decodierer den gesamten im Codierer eingebrachten Rundungsfehler benötigt, um wieder eine korrekte verlustlose Rekonstruktion zu erreichen.

Der Rundungsfehler ist zwar nicht problematisch, wenn mit der Spektraldarstellung nichts "gemacht" wird, also wenn die Spektraldarstellung lediglich gespeichert übertragen und durch einen korrekt hinzupassenden inversen Decodierer wieder decodiert wird. Dann wird immer das Verlustlosigkeitskriterium erfüllt sein, unabhängig davon, wieviel Rundungsfehler in das Spektrum eingeführt worden ist. Wird jedoch mit der Spektraldarstellung, also mit der rundungsfehlerbehafteten idealen Spektraldarstellung eines ursprünglichen Signals etwas unternommen, wie beispielsweise Skalierbarkeitsschichten erzeugt etc., so funktionieren alle diese Dinge umso besser, je geringer der Rundungsfehler ist.

Somit besteht bei verlustlosen Codierungen/Decodierungen auch eine Anforderung dahingehend, daß ein Signal einerseits durch spezielle Decodierer verlustlos rekonstruierbar sein soll, daß ein Signal jedoch auch einen möglichst kleinen Rundungsfehler in seiner Spektraldarstellung haben soll, um Flexibilität dahingehend zu bewahren, daß mit der Spektraldarstellung auch nichtideale verlustlose Decodierer gespeist werden können oder daß Skalierungsschichten etc. erzeugt werden können.

Wie es bereits ausgeführt worden ist, äußert sich der Rundungsfehler als weißes Rauschen über dem gesamten betrachteten Spektrum. Andererseits hat insbesondere bei hochqualitativen Anwendungen, wie sie für den verlustlosen Fall besonders interessant sind, also bei Audioanwendungen mit sehr hohen Abtastfrequenzen, wie beispielsweise 96 kHz, das Audiosignal nur in einem bestimmten Spektralbereich, der typischerweise höchstens bis 20 kHz reichen dürfte, einen vernünftigen Signalgehalt. Typischerweise wird der Bereich, in dem die meiste Signalenergie des Audiosignals konzentriert ist, der Bereich zwischen 0 und 10 kHz sein, während in dem Bereich über 10 kHz die Signalenergie schon deutlich abnehmen wird. Dem durch Runden eingeführten weißen Rauschen ist dies jedoch völlig egal. Es überlagert sich über den gesamten betrachteten Spektralbereich der Signalenergie. Dies führt dazu, daß in Spektralbereichen, also typischerweise in den hohen Spektralbereichen, wo keine Audiosignal- oder nur eine sehr geringe Audiosignalenergie vorhanden ist, lediglich der Rundungsfehler sein wird. Der Rundungsfehler ist insbesondere aufgrund seiner nichtdeterministischen Natur zugleich noch schwer codierbar, d. h. nur mit einem relativ großen Bitaufwand codierbar ist. So spielt der Bitaufwand insbesondere bei manchen verlustlosen Anwendungen zwar nicht die entscheidende Rolle. Damit sich verlustlose Codieranwendungen jedoch immer mehr verbreiten, ist es von hoher Bedeutung, auch hier sehr biteffizient zu arbeiten, um den bei Verlustlosanwendungen inhärenten Vorteil der nichtvorhandenen Qualitätsminderung auch mit entsprechender Biteffizienz zu kombinieren, wie sie von verlustbehafteten Codierkonzepten bekannt ist.

Die Aufgabe der vorliegenden Erfindung besteht darin, ein effizientes Konzept zum Verarbeiten von Signalen zu schaffen.

Diese Aufgabe wird durch eine Vorrichtung zum Verarbeiten eines Signals mit einer Sequenz von diskreten Werten gemäß Patentanspruch 1, ein Verfahren zum Verarbeiten eines Signals mit einer Sequenz von diskreten Werten gemäß Patentanspruch 18 oder ein Computerprogramm gemäß Patentanspruch 19 gelöst.

Der vorliegenden Erfindung liegt die Erkenntnis zugrunde, daß insbesondere im Kontext der verlustlosen Codierung/Decodierung ein Rundungsfehler derart spektral geformt wird, daß er in dem Frequenzbereich des zu codierenden Signals "untergebracht" wird, in dem das Signal ohnehin eine hohe Signalenergie hat, und daß damit einhergehend der Rundungsfehler nicht in Bereichen vorhanden ist, in denen das Signal ohnehin keine Energie hat. Während im Stand der Technik bei der verlustlosen Codierung und insbesondere bei der verlustlosen Codierung auf der Basis von Ganzzahlalgorithmen ein Rundungsfehler über das gesamte Spektrum des Signals weiß verteilt worden ist, wird dem idealen Spektrum erfindungsgemäß der Rundungsfehler in Form von farbigem Rauschen überlagert, und zwar derart, daß die Rauschenergie aufgrund des Rundens dort vorhanden ist, wo das Signal ohnehin seine höchste Signalenergie hat, und daß damit das Rauschen aufgrund des Rundungsfehlers dort ebenfalls eine kleine oder sogar nicht vorhandene Energie hat, wo das zu codierende Signal selbst ebenfalls keine Energie hat. Damit wird der ungünstige Fall vermieden, bei dem der Rundungsfehler, der ein stochastisches Signal ist und damit schwer zu codieren ist, in einem Frequenzbereich das einzige zu codierende Signal ist, und somit die Bitrate unnötig erhöht.

Wenn ein Audiosignal betrachtet wird, bei dem die Energie im niederfrequenten Bereich liegt, so ist die erfindungsgemäß vorhandene Einrichtung zum Runden ausgebildet, um eine spektrale Tiefpaßformung des erzeugten Rundungsfehlers zu erreichen, dahingehend, daß bei hohen Frequenzen des codierten Signals weder eine Signalenergie noch eine Rauschenergie vorhanden ist, während der Rundungsfehler in den Bereich abgebildet wird, wo das Signal ohnehin viel Energie hat.

Insbesondere für verlustlose Codieranwendungen steht dies im Gegensatz zum Stand der Technik, bei dem ein Rundungsfehler spektral hochpaßgefiltert wird, um den Rundungsfehler außerhalb des hörbaren Bereichs zu bringen. Dies entspricht also dem Fall, bei dem der Spektralbereich, in dem sich der Rundungsfehler befindet, entweder elektronisch oder durch das Ohr selbst herausgefiltert wird, um den Rundungsfehler zu eliminieren. Für eine verlustlose Codierung/Decodierung wird der Rundungsfehler jedoch im Decodierer dringend benötigt, da sonst der im Decodierer verwendete Algorithmus, der zum verlustlosen Codieralgorithmus invers ist, Verzerrungen erzeugt.

Das erfindungsgemäße Konzept des spektralen Formens des Rundungsfehlers wird vorzugsweise in Verlustlosanwendungen mit hoher Abtastrate eingesetzt, da insbesondere in den Fällen, wo sich Spektren theoretisch bis zu über 40 kHz erstrecken (aufgrund einer Überabtastung), im hohen Frequenzbereich, in dem ohnehin keine Signalenergie vorhanden ist, also in dem sehr effizient codiert werden kann, dieselbe Situation erreicht wird wie im Fall einer Nicht-Ganzzahl-Codierung, bei der im hohen Frequenzbereich ebenfalls die Signalenergie gleich Null ist.

Dadurch, daß eine große Anzahl von Nullen sehr effizient codiert wird, und dadurch, daß der Rundungsfehler, der problematisch zu codieren ist, in den Bereich verschoben wird, der ohnehin typischerweise sehr fein codiert wird, wird somit die insgesamte Datenrate des Signals im Vergleich zum Fall, bei dem sich der Rundungsfehler als weißes Rauschen über den gesamten Frequenzbereich verteilt, reduziert. Des weiteren wird die Codierperformance - und damit einhergehend auch die Decodierperformance - gesteigert, da auch für die Codierung und Decodierung des hohen Frequenzbereichs keine Rechenzeit aufgewendet werden muß. Das erfindungsgemäße Konzept führt somit auch dazu, daß eine schnellere Signalverarbeitung auf Seiten des Codierers bzw. auf Seiten des Decodierers erreicht werden kann.

Bei einem bevorzugten Ausführungsbeispiel der vorliegenden Erfindung wird das erfindungsgemäße Konzept des Formens bzw. Reduzierens des Approximationsfehlers bei invertierbaren Ganzzahltransformationen, insbesondere bei der IntMDCT angewendet. Hier existieren zwei Einsatzgebiete, nämlich zum einen das multidimensionale Lifting, mit dem die MDCT im Hinblick auf die erforderlichen Rundungsschritte stark vereinfacht werden kann, und zum anderen die bei der ganzzahligen Fensterung erforderlichen Rundungsoperationen, wie sie bei der Vorverarbeitung vor der eigentlichen DCT auftreten.

Erfindungsgemäß wird zur spektralen Formung des Rundungsfehlers ein Error-Feedback-Konzept eingesetzt, bei dem der Rundungsfehler erfindungsgemäß in den Frequenzbereich verschoben wird, in dem das Signal, das gerade verarbeitet wird, die größte Signalenergie hat. Bei Audiosignalen und insbesondere auch bei Videosignalen wird dies der niedrige Frequenzbereich sein, so daß das Error-Feedback-System eine Tiefpaßeigenschaft hat. Dadurch ergeben sich weniger Rundungsfehler im oberen Frequenzbereich, in dem üblicherweise weniger Signalanteile vorhanden sind. Im oberen Bereich überwiegen im Stand der Technik die Rundungsfehler, die dann codiert werden müssen und so die für eine Codierung nötige Bitanzahl erhöhen. Erfindungsgemäß wird dieser Rundungsfehler in den höheren Frequenzen reduziert, was unmittelbar die für die Codierung nötige Bitanzahl verringert.

Bevorzugte Ausführungsbeispiele der vorliegenden Erfindung werden nachfolgend Bezug nehmend auf die beiliegenden Zeichnungen näher erläutert. Es zeigen:

Fig. 1      ein Blockschaltbild des erfindungsgemäßen Konzepts zum Verarbeiten eines Signals mit einer Sequenz von diskreten Werten;

Fig. 2a      ein bekanntes Konzept zum Hochpaßspektralformen eines Quantisierungsfehlers;

Fig. 2b      ein Konzept zum Tiefpaßformen des Rundungsfehlers gemäß der vorliegenden Erfindung;

Fig. 2c      ein Blockschaltbild gemäß einem bevorzugten Ausführungsbeispiel der vorliegenden Erfindung für den Spektralformungs-/Rundungsblock;

Fig. 3      ein Blockschaltbild einer bevorzugten Einrichtung zum Verarbeiten von zeitdiskreten Audioabtastwerten, um ganzzahlige Werte zu erhalten, aus denen ganzzahlige Spektralwerte ermittelbar sind;

Fig. 4      eine schematische Darstellung der Zerlegung einer MDCT und einer inversen MDCT in Givens-Rotationen und zwei DCT-IV-Operationen; und

Fig. 5      eine Darstellung zur Veranschaulichung der Zerlegung der MDCT mit 50-Prozent-Überlappung in Rotationen und DCT-IV-Operationen.

Fig. 6a      ein schematisches Blockschaltbild eines bekannten Codierers mit MDCT und 50-Prozent-Überlappung;

Fig. 6b      ein Blockschaltbild eines bekannten Decodierers zum Decodieren der durch Fig. 10a erzeugten Werte;

Fig. 7      eine Darstellung des Liftings beim Fenstern gemäß Fig. 3;

Fig. 8      eine "umsortierte" Darstellung des Liftings von Fig. 7 zum Fenstern vor der eigentlichen Transformation;

Fig.-9      eine Anwendung der vorliegenden Erfindung für das Fenstern gemäß den Fig. 3, 7 und 8;

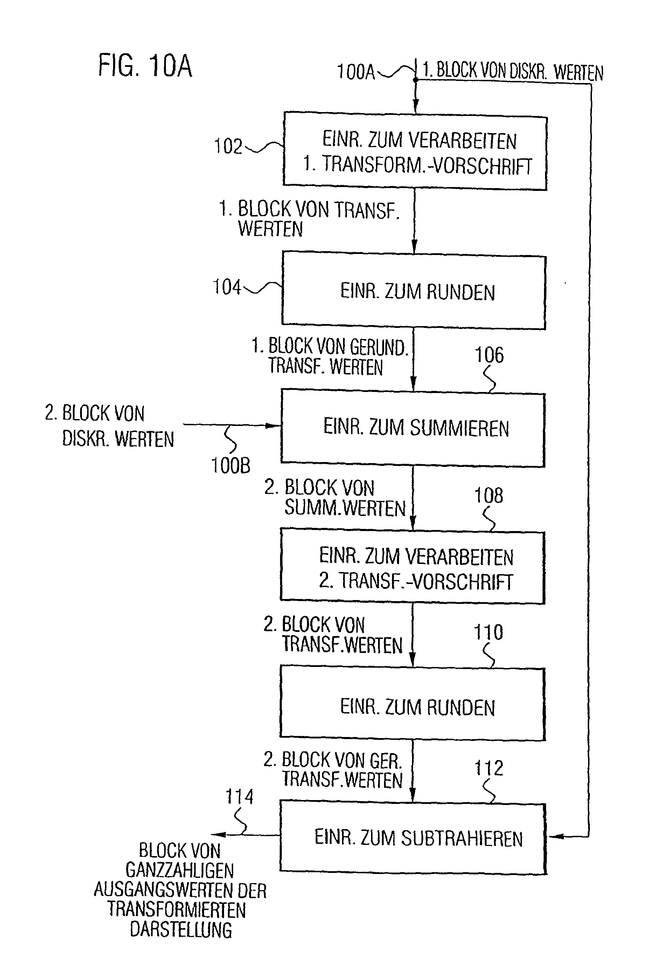

Fig. 10 A - 10 C      Blockschaltbilder einer Vorrichtung zum Umsetzen gemäß einem bevorzugten Ausführungsbeispiel der vorliegenden Erfindung;

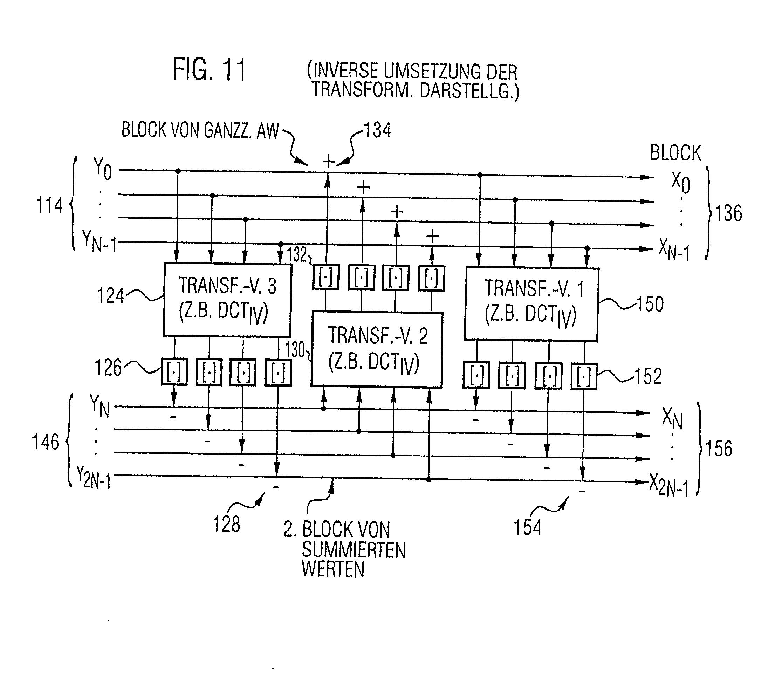

Fig. 11      eine Vorrichtung zum inversen Umsetzen gemäß einem bevorzugten Ausführungsbeispiel der vorliegenden Erfindung;

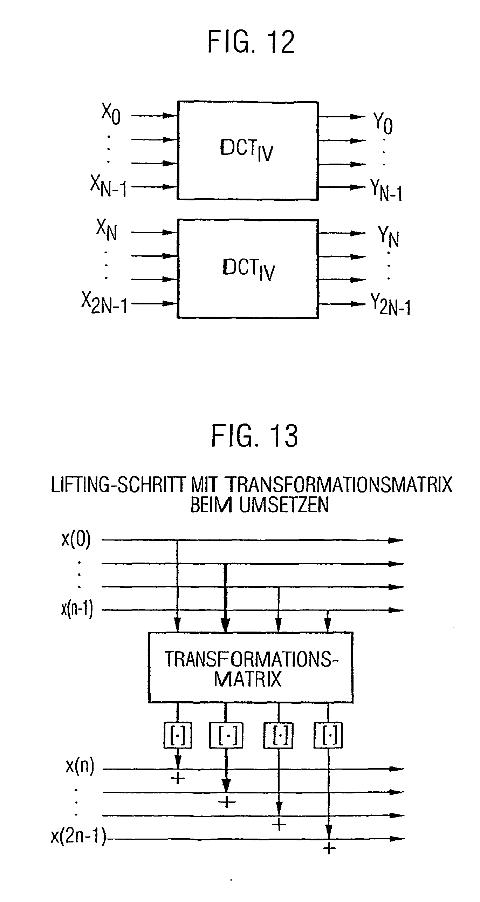

Fig. 12      eine Darstellung der Transformation von zwei aufeinanderfolgenden Blöcken von Werten, wie sie für die vorliegende Erfindung verwendbar ist;

Fig. 13      eine detaillierte Darstellung eines mehrdimensionalen Lifting-Schritts mit einer HinTransformationsmatrix;

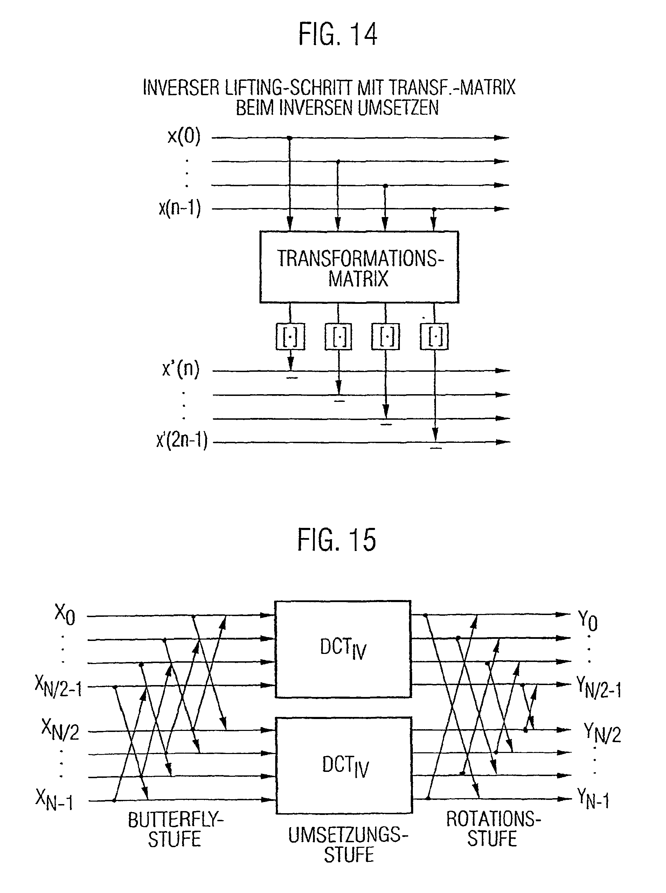

Fig. 14      eine Darstellung eines mehrdimensionalen inversen Lifting-Schritts mit einer Rück-Transformationsmatrix;

Fig. 15      eine Darstellung der vorliegenden Erfindung zur Zerlegung einer DCT-IV der Länge N in zwei DCT-IV der Länge N/2;

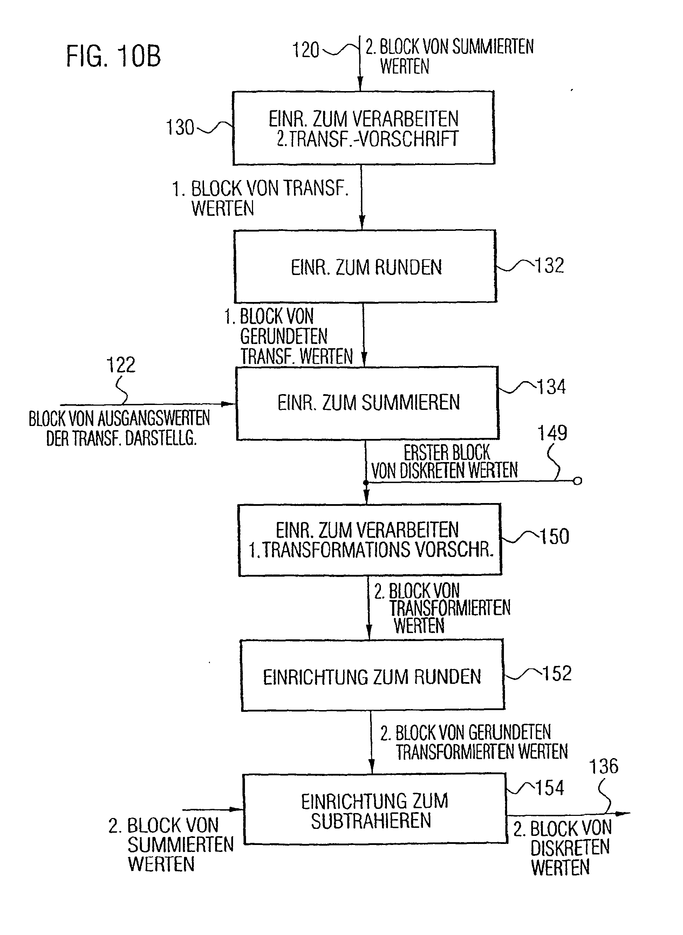

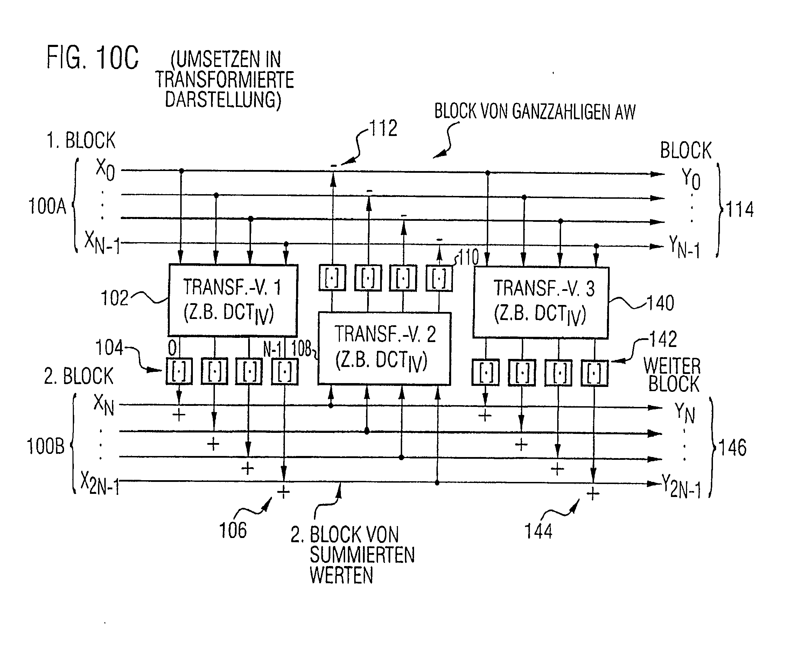

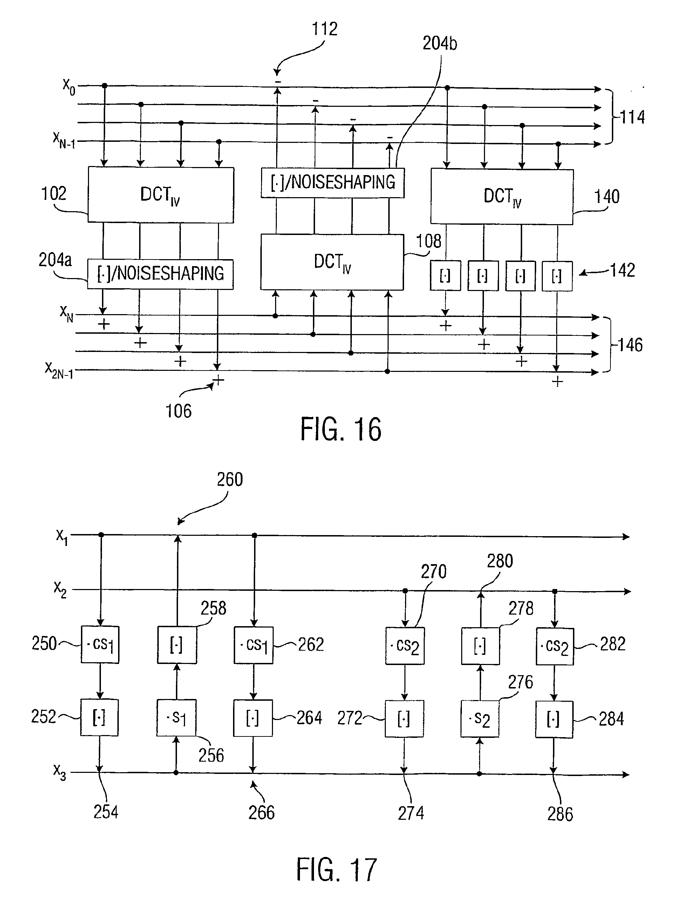

Fig. 16      eine Anwendung des erfindungsgemäßen Konzepts innerhalb der Transformation mit multidimensionalem Lifting von Fig. 10;

Fig. 17      eine Darstellung zwei aufeinanderfolgender Lifting-Schritte;

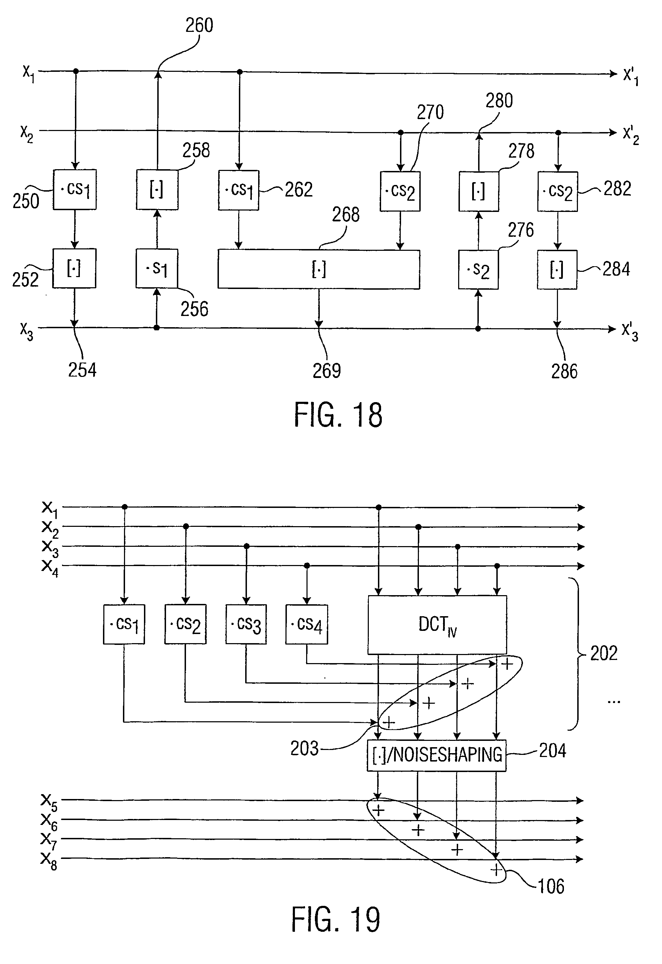

Fig. 18        eine Darstellung des Konzepts zum Reduzieren des Rundungsfehlers bei zwei aufeinanderfolgenden Lifting-Schritten von Fig. 17; und

Fig. 19        eine erfindungsgemäße Kombination des Konzepts von Fig. 18 mit dem Konzept von Fig. 16.

Fig. 1 zeigt eine Vorrichtung zum Verarbeiten eines Signals mit einer Sequenz von diskreten Werten, das über einen Signaleingang 200 in eine Einrichtung 202 zum Manipulieren eingegeben wird. Das Signal ist typischerweise ausgebildet, um einen ersten Frequenzbereich zu haben, in dem das Signal eine hohe Energie hat, und um einen zweiten Frequenzbereich zu haben, in dem das Signal eine vergleichsweise niedrige Energie hat. Ist das erste Signal ein Audiosignal, so wird es im ersten Frequenzbereich, also im niederfrequenten Bereich, die hohe Energie haben und im hochfrequenten Bereich die niedrige Energie haben. Ist das Signal dagegen ein Videosignal, so wird es ebenfalls im niedrigen Bereich die hohe Energie habe und im hohen Bereich die niedrige Energie haben. Im Gegensatz zum Audiosignal ist der Frequenzbereich beim Videosignal ein Ortfrequenzbereich, es sei denn, daß aufeinanderfolgende Video-Frames betrachtet werden, bei denen ebenfalls eine zeitliche Frequenz bezogen auf zum Beispiel einen ausgewählten Bildbereich in aufeinanderfolgenden Frames existiert.

Die Einrichtung 202 zum Manipulieren ist allgemein ausgebildet, um die Sequenz von diskreten Werten so zu manipulieren, daß eine Sequenz von manipulierten Werten erhalten wird, bei denen zumindest ein manipulierter Wert nicht ganzzahlig ist. Diese Sequenz von nichtganzzahligen diskreten Werten wird in eine Einrichtung 204 zum Runden der Sequenz von manipulierten Werten eingespeist, um eine Sequenz von gerundeten manipulierten Werten zu erhalten. Erfindungsgemäß ist die Einrichtung 204 zum Runden ausgebildet, um eine spektrale Formung eines durch die Rundung erzeugten Rundungsfehlers so zu bewirken, daß ein spektral geformter Rundungsfehler in dem ersten Frequenzbereich, also in dem Frequenzbereich, wo das ursprüngliche Signal eine hohe Energie hat, ebenfalls eine hohe Energie hat, und daß der spektral geformte Rundungsfehler in dem zweiten Frequenzbereich, also in dem Frequenzbereich, wo das ursprüngliche Signal eine geringe Energie hat, ebenfalls eine geringe oder keine Energie hat. Allgemein ist die Energie des spektral geformten Rundungsfehlers in dem ersten Frequenzbereich somit höher als die Energie des spektral geformten Rundungsfehlers in dem zweiten Frequenzbereich. Die Spektralformung ändert vorzugsweise jedoch nichts an der Gesamtenergie des Rundungsfehlers.

Vorzugsweise ist die erfindungsgemäße Vorrichtung zum Erzeugen der fehlerbehafteten Sequenz von gerundeten manipulierten Werten entweder direkt oder über weitere Manipulations-/Ründungskombinationen mit einer Einrichtung 206 zum Umsetzen in eine spektrale Darstellung gekoppelt. So kann die fehlerbehaftete Sequenz von gerundeten manipulierten Werten direkt in die Einrichtung 206 zum Umsetzen in eine spektrale Darstellung eingespeist werden, um ein direktes Spektrum der fehlerbehafteten Sequenz von gerundeten manipulierten Werten zu erreichen. Bei einem bevorzugten Ausführungsbeispiel der vorliegenden Erfindung ist die Einrichtung zum Manipulieren jedoch ein Lifting-Schritt bzw. eine Lifting-Matrix und ist die Einrichtung zum Runden ausgebildet, um die nichtganzzahligen Ergebnisse eines Lifting-Schritts zu runden. In diesem Fall folgt der Einrichtung 204 eine weitere Einrichtung zum Manipulieren, die den zweiten Lifting-Schritt ausführt, welcher wiederum eine Einrichtung zum Runden folgt, welcher wiederum eine dritte Einrichtung zum Manipulieren folgt, die den dritten Lifting-Schritt implementiert, wobei dann wieder eine Manipulation stattfindet, so daß alle drei Lifting-Schritte erledigt sind. So wird eine von der ursprünglichen fehlerbehafteten Sequenz von gerundeten manipulierten Werten am Ausgang der Einrichtung 204 abgeleitete fehlerbehaftete Sequenz von gerundeten manipulierten Werten erzeugt, die dann endlich vorzugsweise ebenfalls durch eine Ganzzahltransformation und insbesondere vorzugsweise durch eine ebenfalls mit dem erfindungsgemäßen Konzept ausgestattete Ganzzahltransformation in eine spektrale Darstellung umgesetzt wird, wie es durch den Block 206 dargestellt ist. Das Ausgangssignal der spektralen Darstellung am Ausgang des Blocks 206 hat nunmehr ein Spektrum, das im Gegensatz zum Stand der Technik nicht mehr einen weiß verteilten Rundungsfehler hat, sondern einen Rundungsfehler, der spektral geformt ist, und zwar so, daß dort, wo das eigentliche "Nutzspektrum" eine hohe Signalenergie hat, ebenfalls eine hohe Rundungsfehlerenergie ist, während in den Frequenzbereichen, in denen keine Signalenergie vorhanden ist, auch im besten Fall keine Rundungsfehlerenergie vorhanden ist.

Dieses erfindungsgemäß erzeugte Spektrum wird dann einer Einrichtung 208 zum Entropiecodieren der spektralen Darstellung zugeführt. Die Einrichtung zum Entropiecodieren kann irgendeine Codierungsmethode aufweisen, wie beispielsweise eine Huffman-Codierung, eine arithmetische Codierung etc. Insbesondere zum Codieren einer großen Anzahl von Spektrallinien, die gleich Null sind und die aneinander angrenzen, eignet sich auch eine Lauflängencodierung (Runlength-Codierung), welche natürlich im Stand der Technik nicht anwendbar ist, da hier in solchen Frequenzbereichen ein eigentlich deterministisches Signal codiert werden muß, das jedoch ein weißes Spektrum hat und damit für jegliche Art von Codierwerkzeugen besonders ungünstig ist, da die einzelnen Spektralwerte völlig unkorreliert voneinander sind.

Nachfolgend wird Bezug nehmend auf die Fig. 2a, 2b, 2c auf eine bevorzugte Ausführungsform der Einrichtung 204 zum Runden mit spektraler Formung eingegangen.

Fig. 2a zeigt ein bekanntes Fehlerrückkopplungssystem zur Spektralformung eines Quantisierungsfehlers, wie es in dem Fachbuch "Digitale Audiosignalverarbeitung", U. Zoelzer, Teubner-Verlag, Stuttgart, 1997, beschrieben ist.

Ein Eingangswert x(i) wird einem Eingangssummierer 210 zugeführt. Das Ausgangssignal des Summierers 210 wird einem Quantisierer 212 zugeführt, der einen quantisierten Ausgangswert y(i) an einem Ausgang der Spektralformungsvorrichtung liefert. An einem zweiten Summierer 214 wird die Differenz zwischen dem Wert nach dem Quantisierer 212 und dem Wert vor dem Quantisierer 212 bestimmt, also der Rundungsfehler e(i). Das Ausgangssignal des zweiten Summierers 214 wird in eine Verzögerungseinrichtung 216 eingespeist. Der um eine Zeiteinheit verzögerte Fehler e(i) wird dann von dem Eingangswert mittels des Addierers 210 subtrahiert. Damit ergibt sich eine Hochpaßbewertung des ursprünglichen Fehlersignals e(n).

Wird statt der Verzögerungseinrichtung $z^{-1}$, die in Fig. 2a mit 216 bezeichnet ist, $z^{-1} (-2 + z^{-1})$ verwendet, so ergibt sich eine Hochpaßbewertung zweiter Ordnung. Solche Spektralformungen des Quantisierungsfehlers werden bei bestimmten Anwendungsbeispielen dazu verwendet, um den Quantisierungsfehler aus dem wahrnehmbaren Bereich, also aus dem z. B. Tiefpaßbereich des Signals x(n), "auszublenden", damit der Quantisierungsfehler nicht wahrgenommen wird.

Erfindungsgemäß wird, wie es in Fig. 2b gezeigt ist, statt dessen eine Tiefpaßbewertung durchgeführt, um eine Spektralformung des Fehlers nicht außerhalb des Wahrnehmungsbereichs, sondern genau in den Wahrnehmungsbereich hinein zu erreichen. Hierzu wird das Ausgangssignal des Addierers 210, wie es in Fig. 2b gezeigt ist, in einen Rundungsblock 218 eingespeist, der irgendeine Rundungsfunktion implementiert, die beispielsweise eine Aufrundung, eine Abrundung, eine Rundung durch Abschneiden, eine Aufrundung/Abrundung zur nächsten Ganzzahl oder zur übernächsten, überübernächsten ... Ganzzahl sein kann. Im Fehlerrückkopplungspfad, also zwischen dem Addierer 214 und dem Addierer 210, befindet sich nun zusätzlich zu dem Verzögerungsglied 216 noch ein weiterer Rückkopplungsblock 220 mit einer Impulsantwort h(n) bzw. einer Übertragungsfunktion H(z). Die z-Transformierte der Ausgangsfolge, also Y(z) hängt mit der Eingangsfolge X(z) über die in Fig. 2b dargestellte Gleichung zusammen.

$$e(n) = y(n) - x'(n)$$

In der vorstehenden Gleichung ist x'(n) das Ausgangssignal des Addierer 210 und ist y(n) das Ausgangssignal aus dem Rundungsblock 218.

Ferner gilt folgende Gleichung:

$$y(n) = round (x'(n))$$

In der vorstehenden Gleichung stellt "round" die Rundungsfunktion dar, die durch den Block 218 implementiert wird. Ferner gilt folgende Gleichung, in der "*" für die Faltungsoperation steht:

$$x'(n) = x(n) - h(n) * e(n - 1)$$

Im Z-Bereich ergibt sich folgendes:

$$Y(z) = X'(z) + E(z)$$

$$X'(z) = X(z) - E(z) z^{-1} H(z)$$

$$Y(z) = X(z) + (1 - z^{-1} H(z)) E(z)$$

Nachdem E (z) der Rundungsfehler ist, wird er durch das Filter (1 - z⁻¹ H(z)) spektral geformt. Erfindungsgemäß wird nunmehr eine tiefpaßartige Übertragungsfunktion eingesetzt. Die einfachste tiefpaßartige Übertragungsfunktion kann erhalten werden, wenn beispielsweise H(z) = -1 gesetzt wird. In diesem einfachen Beispiel wird also der Rundungsfehler der vorherigen Rundungsoperation einfach zum zu rundenden Wert addiert, bevor die nächste Rundungsoperation angewandt wird. Damit wird eine einfache und für die vorliegende Erfindung sehr effiziente und damit bevorzugte Tiefpaßfilterung des Rundungsfehlers erreicht.

Eine Implementierung ist in Fig. 2c dargestellt. Insbesondere ist die Einrichtung 202. zum Manipulieren einer ursprünglichen Sequenz von ganzzahligen diskreten Werten dargestellt, welche ausgangsseitig die Sequenz von nichtganzzahligen diskreten Werten $y_0, y_1, y_2, ..., y_i$ liefert. Nunmehr wird im Gegensatz zum Stand der Technik nicht mehr jeder Wert für sich gerundet, wie es beispielsweise anhand der Blöcke 20, 24, 28 in Fig. 3 oder anhand der Blöcke 104, 110, 142 in Fig. 10 C oder 126, 132, 150 in Fig. 11 dargestellt ist. Statt dessen werden die nichtganzzahligen diskreten Werte der Sequenz $y_0, y_1, y_2, y_3, ...,$ durch das in Fig. 2c gezeigte "Netzwerk" abhängig voneinander mit Tiefpaßcharakteristik im Rückkopplungszweig gefiltert, so daß sich die erfindungsgemäße Spektralformung ergibt. Gleiche Elemente in Fig. 2c wie in Fig. 2b sind mit den gleichen Bezugszeichen dargestellt.

Ferner ist in Fig. 2c eine Parallelimplementierung dargestellt, also eine Implementierung, in der die zu rundenden Werte parallel bereitgestellt werden. Selbstverständlich ist diese Darstellung nur schematisch. Die Werte $y_0, y_1, y_2, ...,$ können sequentiell bereitgestellt werden, um dann sequentielle Ausgangswerte zu erhalten, wobei in diesem Fall eine einzige Ausführung der Struktur aus den Elementen 210, 214, 216, 218, 220 genügt. Lediglich aus Übersichtlichkeitsgründen sind die sich wiederholenden Strukturen der Elemente 214, 218, 210, 220 dargestellt.

Die in Fig. 2c gezeigte Einrichtung 204 zum Runden ist somit wirksam, um zunächst den gerundeten Wert $[y_0]$ zu berechnen. Dann wird der Rundungsfehler $i_0$ berechnet. Dann wird der Rundungsfehler $i_0$ durch den Block 220 mit der Übertragungsfunktion H(z), welche vorzugsweise gleich -1 ist, gewichtet (gefiltert) und in den Addierer 210 eingespeist. Dieser gefilterte Rundungsfehler wird zu dem nächsten Wert der Sequenz $y_i$ hinzuaddiert, woraufhin das Ergebnis des Addierers 210 im Block 218 gerundet wird, um den gerundeten nächsten Wert $[y_1]$ zu erhalten. Hierauf wird durch den Addierer 214 wieder der Rundungsfehler bestimmt, und zwar unter Verwendung des gerundeten Werts $[y_1]$ und des ursprünglichen Werts $y_1$, wobei dieser erhaltene Rundungsfehler $i_1$ wieder im Block 220 gefiltert wird, um dieselbe Prozedur für den nächsten Wert $y_2$ der Sequenz durchzuführen.

An dieser Stelle sei darauf hingewiesen, daß die Richtung egal ist. Dies bedeutet, daß man auch von $y_i$ mit größeren Indizes zu $y_i$ mit kleineren Indizes fortschreiten kann, also in entgegengesetzter Richtung wie sie in Fig. 2c insbesondere durch die Pfeile symbolisiert ist, die sich von dem Block 220 zum Addierer 210 erstrecken. Die Reihenfolge, also ob von niedrigen zu hohen Sequenzindizes oder von hohen zu niedrigen Sequenzindizes fortgeschritten wird, spielt somit keine Rolle.

Insbesondere bei dem Anwendungsfall der Ganzzahl-MDCT (IntMDCT) wird die spektrale Formung des Rundungsfehlers vorzugsweise besonders effizient an Stellen eingesetzt, die folgende Bedingungen erfüllen:

- An mehreren benachbarten Werten wird unabhängig voneinander ein Rundungsfehler zugefügt.

- Bei den benachbarten Werten handelt es sich (im weitesten Sinne) um Zeitsignale, die später durch eine Transformation in eine spektrale Darstellung umgesetzt werden, also in den Frequenzbereich übergeführt werden.

Nachfolgend wird genauer erläutert, in welchen Teilen der Ganzzahl-MDCT die spektrale Formung des Rundungsfehlers bevorzugt eingesetzt wird.

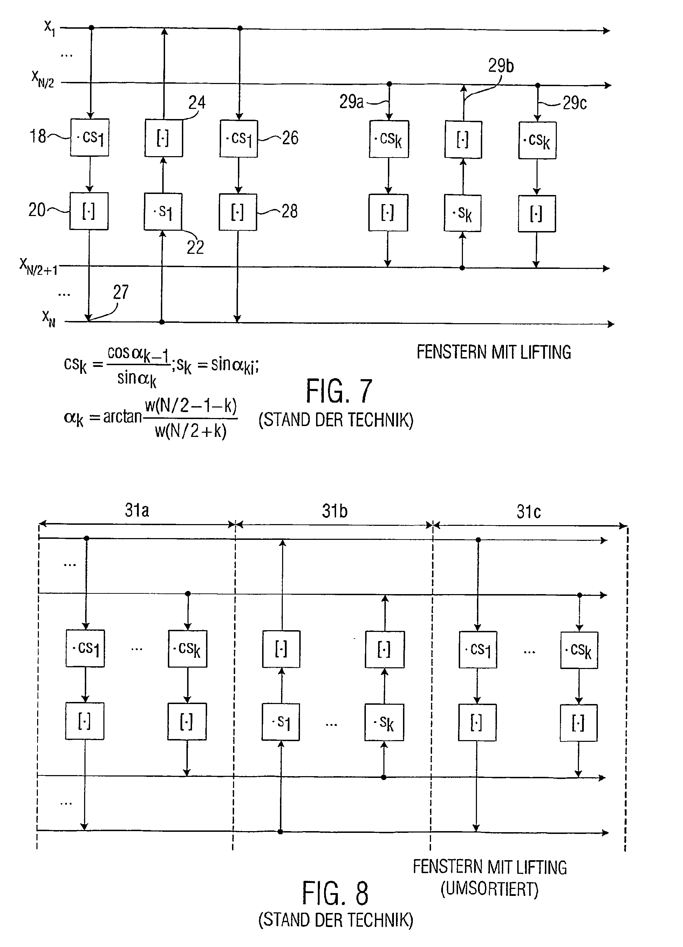

Der erste bevorzugte Anwendungsfall besteht in der Fensterung vor der eigentlichen Transformation, also für das Runden, das in Fig. 3 durch die Blöcke 20, 24, 28 spezifiziert ist. Die Lifting-Operation, wie sie jeder einzelne ursprüngliche Abtastwert $x_1, ..., x_N$ erfährt, und wie sie anhand von Fig. 3 skizziert ist, kann auch durch das in Fig. 7 gezeigte Diagramm veranschaulicht werden. Hierbei werden die Anwendungen der drei Lifting-Matrizen, also die jeweilige Multiplikation mit einem Faktor für einen Abtastwert, abtastwertweise dargestellt, so daß sich die Sequenz "von oben nach unten", "von unten nach oben" und "von oben nach unten" ergibt.

Bei der Notation in Fig. 7 sei darauf hingewiesen, daß dann, wenn ein Pfeil auf eine waagrechte Linie trifft, hier eine Addition stattfindet. Eine solche Addition ist beispielsweise bei 27 in Fig. 7 gezeigt. Wenn Fig. 4 mit Fig. 7 verglichen wird, so ist der einzige Unterschied darin, daß x(0) in Fig. 4 $x_1$ von Fig. 7 entspricht. Insofern entspricht $x_N$ in Fig. 7 x (N-1) in Fig. 4. Dagegen entspricht x(N/2-1) von Fig. 4 $x_{N/2}$ von Fig. 7. Ferner entspricht x (N/2) in Fig. 4 $x_{N/2+1}$ von Fig. 7, so daß sich die in Fig. 4 gezeigten Butterflies ergeben, durch die jeweils ein Wert aus dem ersten Viertel eines Fensters mit einem Wert aus dem zweiten Viertel des Fensters gemäß den Lifting-Schritten gewichtet wird, während analog hierzu auch ein Wert des dritten Viertels des Fensters mit einem Wert des vierten Viertels des Fensters durch die "Unten-Oben-Unten-Systematik" verarbeitet wird, wie sie in Fig. 7 dargestellt ist.

Entsprechend wird für das Paar aus Werten $x_{N/2}$ und $x_{N/2+1}$ vorgegangen. Hier gibt es wieder eine Unten-Oben-Unten-Sequenz, wobei ein Unten-Schritt 29a von einem Oben-Schritt 29b gefolgt wird, dem wiederum ein Unten-Schritt 29c folgt.

Fig. 7 zeigt somit die ganzzahlige Fensterung durch Lifting. Diese Berechnung kann auch ohne weiteres umsortiert werden, ohne das Ergebnis zu verändern, wie es in Fig. 8 dargestellt ist. So können selbstverständlich zunächst alle Nach-Unten-Schritte (alle Schritte 29a) durchgeführt werden. Dann können alle Nach-Oben-Schritte (29b) durchgeführt werden, um schließlich alle Nach-Unten-Schritte 29c durchzuführen, so daß sich ein Nach-Unten-Block 31a, ein Nach-Oben-Block 31b und wieder ein Nach-Unten-Block 31c ergibt. Es sei darauf hingewiesen, daß Fig. 8 Fig. 7 entspricht, jedoch in einer anderen Darstellung, die zum Verständnis der vorliegenden Erfindung geeigneter ist.

Fig. 9 zeigt nunmehr das erfindungsgemäße Konzept, bei dem die erfindungsgemäße Rundung zum Runden mit spektraler Formung durchgeführt wird. Das in Fig. 9 gezeigte Lifting-Berechnungskonzept entspricht Fig. 1 dahingehend, daß die Eingangswerte $x_1$, $x_{N/2}$ die ursprüngliche Sequenz von ganzzahligen diskreten Werten am Eingang 200 darstellen. Die Bewertungsblöcke $cs_1$, $cs_2$, ..., $cs_k$ im Unten-Block 31a bilden zusammen die Einrichtung 202 zum Manipulieren. Der mit [.]/NoiseShaping bezeichnete Block stellt die Einrichtung 204 zum Runden von Fig. 1 dar. Am Ausgang dieses Blocks 204 ergibt sich nunmehr die fehlerbehaftete Sequenz von gerundeten manipulierten Werten.

Bei dem in Fig. 9 gezeigten Ausführungsbeispiel wird die Sequenz von fehlerbehafteten gerundeten manipulierten Werten einer weiteren Sequenz $x_{N/2+1}$ bis $x_N$ hinzuaddiert, um eine neue Sequenz von ganzzahligen diskreten Werten zu erhalten, welche wiederum manipuliert wird (durch die Blöcke $s_1$, $s_k$ im Oben-Block 31b), um dann wieder eine erfindungsgemäße Rundung im Oben-Block 31b durch das Element 204b zu erreichen. Dann ist wieder, wie im Unten-Block 31a, also wie im Fall des Addieres 205a, ein werteweiser Addierer 205b vorgesehen, um die neue Sequenz zu erhalten, die wiederum in einen Manipulierer 202c eingespeist wird, wobei das Ausgangssignal des. Manipulierers 202c nicht-ganzzahlig ist und in einem weiteren Runder 204c gerundet wird, um wiederum durch einen weiteren Addierer 205c hinzuaddiert zu werden, und zwar zu der in den Manipulierer 202b eingespeisten Sequenz.

Ausgangsseitig ergibt sich bei dem in Fig. 9 gezeigten Ausführungsbeispiel ein Block von gefensterten Abtastwerten, welcher gemäß der Systematik, wie sie anhand von Fig. 4 dargestellt ist, in entsprechend verschobene DCT-IV-Blöcke eingespeist werden. Diese verschobenen DCT-Blöcke liefern eine Transformation, um eine fehlerbehaftete Sequenz von gerundeten manipulierten Werten in eine spektrale Darstellung umzusetzen. Die DCT-IV-Blöcke in Fig. 4 stellen somit eine Implementierung der Einrichtung 206 von Fig. 1 dar. Analog hierzu stellen die Blöcke zur Durchführung der inversen ganzzahligen DCT-IV analoge Einrichtungen zum Umsetzen in eine zeitliche Darstellung dar.

Nachfolgend wird Bezug nehmend auf die Fig. 10 bis 15 auf die Anwendung des multidimensionalen Liftings eingegangen, um eine ganzzahlige Implementierung der Einrichtung zum Umsetzen in die spektrale Darstellung 206 von Fig. 10a bzw. eine analoge ganzzahlige Implementierung der inversen Umsetzung (für einen Decodierer) darzulegen. Das Konzept des multidimensionalen Liftings ist in DE-A-10331803 dargestellt.

Fig. 10a zeigt eine Vorrichtung zum Umsetzen von diskreten Werten in eine transformierte Darstellung mit ganzzahligen Werten. Die diskreten Werte werden über einen ersten Eingang 100a sowie über einen zweiten Eingang 100b in die Vorrichtung eingespeist. Über den Eingang 100a wird ein erster Block von diskreten Werten eingespeist, während über den Eingang 100b ein zweiter Block von diskreten Werten eingespeist wird. Die diskreten Werte stellen Audiodaten oder Bilddaten bzw. Videodaten dar. Wie es nachfolgend noch dargelegt werden wird, kann der erste Block von diskreten Werten und kann der zweite Block von diskreten Werten tatsächlich zwei zeitlich aufeinanderfolgende Blöcke von Audioabtastwerten umfassen. Der erste und der zweite Block von diskreten Werten können auch zwei durch diskrete Werte dargestellte Bilder bzw. Restwerte nach einer Prädiktion oder Differenzwerte bei einer Differenzcodierung etc. umfassen. Alternativ können die beiden Blöcke von diskreten Werten jedoch einer Vorverarbeitung unterzogen worden sein, wie beispielsweise bei der ganzzahligen Implementierung der MDCT, wo der erste Block und der zweite Block von diskreten Werten durch Givens-Rotationen aus tatsächlichen gefensterten Abtastwerten erzeugt worden sind. Der erste und der zweite Block von diskreten Werten können somit durch irgendwelche Verarbeitungen, wie beispielsweise Rotationen, Permutationen, Plus/Minus-Butterflies, Skalierungen etc. von ursprünglichen Audiodaten oder Bilddaten abgeleitet sein. Dennoch enthalten der erste und der zweite Block von diskreten Werten, obgleich sie nicht direkt Audioabtastwerte oder diskretisierte Bildwerte sind, Audioinformationen bzw. Bildinformationen.

Der erste Block von diskreten Werten wird über den Eingang 100a in eine Einrichtung 102 zum Verarbeiten des ersten Blocks von diskreten Werten unter Verwendung einer 1. Transformationsvorschrift eingespeist, um an einem Ausgang der Einrichtung 102 einen ersten Block von transformierten Werten zu erhalten, wie es in Fig. 10a gezeigt ist. Dieser erste Block von transformierten Werten wird typischerweise nicht ganzzahlig sein, sondern wird Gleitkommawerte umfassen, wie sie typischerweise durch irgendeine Transformationsvorschrift, wie beispielsweise eine Fourier-Transformation, eine Laplace-Transformation, eine FFT, eine DCT, eine DST, eine MDCT, eine MDST oder irgendeine andere Transformation, wie beispielsweise eine Wavelet-Transformation mit beliebigen Basisfunktionen, erhalten werden. Der erste Block von transformierten Werten wird in eine Einrichtung 104 zum Runden des ersten Blocks von transformierten Werten eingespeist, um ausgangsseitig einen ersten Block von gerundeten transformierten Werten zu erhalten. Die Einrichtung 104 zum Runden ist ausgebildet, um irgendeine Rundungsfunktion durchzuführen, wie beispielsweise eine Rundung durch Abschneiden oder eine abhängig von dem Gleitkommawert durchzuführende Aufrundung bzw. Abrundung etc.

Die Rundungsvorschrift, die durch die Einrichtung 104 implementiert wird, ist somit dafür verantwortlich, daß der erste Block von gerundeten transformierten Werten wieder lediglich ganzzahlige Werte aufweist, deren Genauigkeit durch die von der Einrichtung 104 verwendete Rundungsvorschrift bestimmt ist. Der erste Block von gerundeten transformierten Werten wird, ebenso wie der zweite Block von diskreten Werten, der an dem zweiten Eingang 100b anliegt, einer Einrichtung 106 zum Summieren zugeführt, um einen zweiten Block von summierten Werten zu erhalten. Wenn das Audiosignal-Beispiel betrachtet wird, so ist zu sehen, daß durch die Einrichtung 106 Spektralwerte aus dem ersten Block von gerundeten transformierten Werten zu Zeitwerten aus dem zweiten Block von diskreten Werten addiert werden. Liegen die diskreten Werte des zweiten Blocks beispielsweise als Spannungswerte vor, so empfiehlt es sich, daß der erste Block von gerundeten transformierten Werten ebenfalls als Spannungsamplituden, also als Werte mit der Einheit V vorliegt. In diesem Fall ist keine Einheitenproblematik bei der Summation zu erwarten. Für Fachleute ist es jedoch offensichtlich, daß mit dem ersten Block von gerundeten transformierten Werten bzw. mit dem zweiten Block von diskreten Werten beliebige Einheitennormierungen vorgenommen werden können, dahingehend, daß sowohl der erste Block von gerundeten transformierten Werten als auch der zweite Block von diskreten Werten z. B. einheitenlos sind.

Der zweite Block von summierten Werten wird einer Einrichtung 108 zum Verarbeiten des zweiten Blocks von summierten Werten unter Verwendung einer 2. Transformationsvorschrift zugeführt, um einen zweiten Block von transformierten Werten zu erhalten. Ist die Transformationsvorschrift, die in der Einrichtung 102 verwendet wird, beispielsweise eine Zeit-Frequenz-Transformationsvorschrift, so ist die 2. Transformationsvorschrift, die im Block 108 verwendet wird, z. B. eine Frequenz-Zeit-Transformationsvorschrift. Diese Verhältnisse können jedoch auch umgekehrt sein, so daß der erste und der zweite Block von diskreten Werten beispielsweise Spektralwerte sind, so daß durch die Einrichtung 102 zum Verarbeiten unter der Transformationsvorschrift Zeitwerte erhalten werden, während durch die Einrichtung zum Verarbeiten mittels der inversen Transformationsvorschrift, also die Einrichtung 108, wieder Spektralwerte erhalten werden. Die 1. und die 2. Transformationsvorschrift können somit eine Hin- oder eine Rück-Transformationsvorschrift sein, wobei dann die inverse Transformationsvorschrift die Rück-Transformationsvorschrift bzw. die Hin-Transformationsvorschrift ist.

Der zweite Block von transformierten Werten wird, wie es in Fig. 10a gezeigt ist, in eine Einrichtung 110 zum Runden eingespeist, um einen zweiten Block von gerundeten transformierten Werten zu erhalten, welcher schließlich in eine Einrichtung 112 zum Subtrahieren eingespeist wird, um den zweiten Block von gerundeten transformierten Werten von dem ersten Block von diskreten Werten, der über den ersten Eingang 108a eingespeist wird, zu subtrahieren, um einen Block von ganzzahligen Ausgangswerten der transformierten Darstellung zu erhalten, welcher an einem Ausgang 114 ausgebbar ist. Durch Verarbeiten des Blocks von ganzzahligen Ausgangswerten der transformierten Darstellung unter Verwendung einer beliebigen dritten Transformationsvorschrift, die auch in der Einrichtung 102 verwendet worden ist oder sich von derselben unterscheidet, und durch nachfolgendes Runden des Blocks von transformierten Ausgangswerten, um einen Block von gerundeten transformierten Ausgangswerten zu erhalten, und durch anschließendes Summieren des Blocks von gerundeten transformierten Ausgangswerten und des zweiten Blocks von summierten Werten kann ein weiterer Block von ganzzahligen Ausgangswerten der transformierten Darstellung erhalten werden, der mit dem am Ausgang 114 anliegenden Block von ganzzahligen Ausgangswerten eine komplette transformierte Darstellung des ersten und des zweiten Blocks von diskreten Werten liefert.

Jedoch auch ohne die letzten drei Schritte des Verarbeitens, Rundens und Summierens, in denen der Block von ganzzahligen Ausgangswerten der transformierten Darstellung am Ausgang 114 eingesetzt wird, kann bereits ein Teil der gesamten transformierten Darstellung erhalten werden, nämlich z. B. die erste Hälfte, die, wenn sie der inversen Verarbeitung unterzogen wird, eine Rück-Berechnung des ersten und des zweiten Blocks von diskreten Werten ermöglicht.

An dieser Stelle sei darauf hingewiesen, daß je nach Transformationsvorschrift die 1., 2. und ggf. dritte Transformationsvorschrift identisch sein können. Dies ist beispielsweise bei der DCT-IV der Fall. Würde als 1. Transformationsvorschrift eine FFT eingesetzt werden, so könnte als zweite (inverse) Transformationsvorschrift die IFFT, die nicht identisch zur FFT ist, verwendet werden.

Aus rechentechnischen Gründen wird es bevorzugt, die Transformationsvorschrift in Form einer Matrix bereitzustellen, welche dann, wenn die Anzahl der diskreten Werte des ersten Blocks gleich der Anzahl der diskreten Werte des zweiten Blocks ist, eine quadratische NxN-Matrix ist, wenn die Anzahl der diskreten Werte des ersten Blocks und die Anzahl der diskreten Werte des zweiten Blocks jeweils gleich N sind.

Die Einrichtungen 104 und 110 zum Runden sind bei einem Ausführungsbeispiel ausgebildet, um gemäß einer Rundungsfunktion zu runden, die gerundete Ergebnisse liefert, deren Genauigkeit geringer als eine einem Rechner, der die in Fig. 10a gezeigten Funktionalitäten ausführt, inhärente Maschinengenauigkeit ist. Bezüglich der Rundungsfunktion sei darauf hingewiesen, dass dieselbe lediglich bei einem bevorzugten Ausführungsbeispiel eine nicht-ganzzahlige Zahl auf die nächste größere oder kleinere Ganzzahl abbildet. Die Rundungsfunktion kann genauso auch auf andere Ganzzahlen abbilden, wie beispielsweise die Zahl 17,7 auf die Zahl 10 oder auf die Zahl 20, solange die Rundungsfunktion eine Verringerung der Genauigkeit der zu rundenden Zahl bewirkt. Beim obigen Beispiel ist die ungerundete Zahl eine Zahl mit einer Stelle hinter dem Komma, während die gerundete Zahl eine Zahl ist, die keine Stelle mehr hinter dem Komma hat.

Obgleich in Fig. 10a die Einrichtung 102 zum Verarbeiten unter Verwendung der 1. Transformationsvorschrift und die Einrichtung 108 zum Verarbeiten unter Verwendung der 2. Transformationsvorschrift als separate Einrichtungen gezeigt sind, sei darauf hingewiesen, daß in einer konkreten Implementierung lediglich eine Transformationsfunktionseinheit vorhanden sein kann, welche, gesteuert von einer speziellen Ablaufsteuerung, zunächst den ersten Block von diskreten Werten transformiert und dann, zum entsprechenden Zeitpunkt des Algorithmus, den zweiten Block von summierten Werten invers transformiert. Dann wären die erste und die zweite Transformationsvorschrift identisch. Dasselbe gilt für die beiden Einrichtungen 104, 110 zum Runden. Auch diese müssen nicht als getrennte Einrichtungen vorgesehen sein, sondern können durch eine Rundungsfunktionseinheit implementiert werden, welche wieder gesteuert von der Ablaufsteuerung je nach Anforderung des Algorithmus zunächst den ersten Block von transformierten Werten rundet und dann den zweiten Block von transformierten Werten rundet.

Bei einem Ausführungsbeispiel sind der erste Block von diskreten Werten und der zweite Block von diskreten Werten die ganzzahligen gefensterten Abtastwerte, wie sie am Ausgang des Blocks 28 in Fig. 3 erhalten werden. Die Ganzzahl-DCT im Block 14 von Fig. 3 wird dann durch den in Fig. 1 gezeigten Ganzzahl-Algorithmus implementiert, derart, daß die transformierte Darstellung am Beispiel des Audiosignals, auf das sich Fig. 3 bezieht, die ganzzahligen Spektralwerte am Ausgang 30 der in Fig. 3 gezeigten Vorrichtung darstellt.

Nachfolgend wird anhand von Fig. 10b eine Fig. 10a korrespondierende Einrichtung zum inversen Umsetzen dargestellt, bei der neben dem Block von ganzzahligen ausgangswerten am Ausgang des Blocks 112 von Fig. 10a auch der zweite Block von summierten werten am Ausgang der Einrichtung 106 von Fig. 10a verwendet werden. Bezugnehmend auf die nachfolgend noch detailliert erläuterte Fig. 11 entspricht dies dem Fall, dass lediglich die Blöcke 150 und 130 vorhanden sind, nicht aber der Transformationsblock 124.

Fig. 10b zeigt eine Vorrichtung zum inversen Umsetzen eines Blocks von ganzzahligen Ausgangswerten der transformierten Darstellung, wie sie am Ausgang 114 von Fig. 10a erhalten wird, und des zweiten Blocks von summierten Werten. Der 2. Block von summierten Werten wird in einen Eingang 120 der in Fig. 10b gezeigten Vorrichtung zum inversen Umsetzen eingespeist. Der Block von Ausgangswerten der transformierten Darstellung wird in einen weiteren Eingang 122 der Vorrichtung zum inversen Umsetzen eingespeist.

Der 2. Block von summierten Werten wird einer Einrichtung 130 zum Verarbeiten dieses Blocks unter Verwendung der 2. Transformationsvorschrift eingespeist, wenn die zuletzt verwendete Transformationsvorschrift beim Codieren die 2. Transformationsvorschrift war. Die Einrichtung 130 liefert ausgangsseitig einen ersten Block von transformierten Werten, welcher einer Einrichtung 132 zum Runden zugeführt wird, welche ausgangsseitig wiederum einen ersten Block von gerundeten transformierten Werten erzeugt. Der erste Block von gerundeten transformierten Werten wird dann mittels einer Einrichtung 134 von dem Block von Ausgangswerten der transformierten Darstellung subtrahiert, um den ersten Block von diskreten Werten an einem ersten Ausgang 149 der Vorrichtung von Fig. 10b zu erhalten.

Dieser erste Block von diskreten Werten wird einer Einrichtung 150 zum Verarbeiten dieses Blocks unter Verwendung der 1. Transformationsvorschrift zugeführt, um einen zweiten Block von transformierten Werten am Ausgang der Einrichtung 150 zu erhalten. Dieser zweite Block von transformierten subtrahierten Werten wird wiederum in der Einrichtung 152 gerundet, um einen zweiten Block von gerundeten transformierten Werten zu erhalten. Dieser zweite Block von gerundeten transformierten Werten wird von dem eingangsseitig gelieferten 2. Block von summierten Werten, der über den Eingang 120 eingegeben worden ist, subtrahiert, um ausgangsseitig einen zweiten Block von diskreten Werten an einem Ausgang 136 zu erhalten.

Im Hinblick auf das Verhältnis von 1., 2. und 3. Transformationsvorschrift sowie im Hinblick auf die spezielle Implementierung der einzelnen Funktionsblöcke in Fig. 10b durch gemeinsame Funktionseinheiten und eine entsprechende Ablaufsteuerung/Zwischenspeicherung wird auf die Bezug nehmend auf Fig. 10a gegebenen Ausführungen verwiesen.

Nachfolgend wird Bezug nehmend auf Fig. 10c ein bevorzugtes Ausführungsbeispiel der in Fig. 10a allgemein dargestellten Vorrichtung zum Umsetzen in eine transformierte Darstellung dargelegt. Das Ausführungsbeispiel in Fig. 10a umfaßt eine weitere Transformation/Rundung im Vergleich zu Fig. 10a, um aus dem zweiten Block von summierten Werten den weiteren Block von ganzzahligen Ausgangswerten zu erzeugen.

Der erste Eingang 100a umfaßt N Eingangsleitungen $x_0$, ..., $x_{N-1}$ zum Eingeben von N Werten des ersten Blocks von diskreten Werten. Der zweite Eingang 100b umfaßt ebenfalls N Leitungen zum Eingeben der N Werte $x_N$, ... , $x_{2N-1}$ des zweiten Blocks von diskreten Werten. Die Einrichtung 102 von Fig. 10a ist in Fig. 10c als DCT-IV-Transformierer gezeichnet. Der DCT-Transformierer 102 ist ausgebildet, um aus N Eingangswerten N Ausgangswerte zu erzeugen, von denen dann jeder, wie es in Fig. 10c durch die Einrichtung 104 gezeigt ist, durch die Rundungsvorschrift, die mit "[.]" bezeichnet ist, gerundet wird. Die Einrichtung 106 zum Summieren ist derart dargestellt, daß eine werteweise Aufsummation stattfindet. Dies bedeutet, daß der Ausgangswert der Einrichtung 102 mit dem Index 0 mit dem ersten Wert des zweiten Blocks von diskreten Werten, der den Index N hat, summiert wird. Allgemein wird somit der Wert des ersten Blocks von gerundeten transformierten Werten am Ausgang der Rundungseinrichtung 104 mit einer Ordnungszahl i mit dem diskreten Wert des zweiten Blocks von Ausgangswerten mit einer Ordnungszahl N+i einzeln summiert, wobei i ein Laufindex ist, der sich von 0 bis N-1 erstreckt.

Die Einrichtung 108 zum Verarbeiten unter Verwendung der 2. Transformationsvorschrift ist ebenfalls als DCT-IV-Transformierer gezeichnet. Die Einrichtung 112 zum Subtrahieren ist ebenfalls bei dem in Fig. 10c gezeigten bevorzugten Ausführungsbeispiel ausgebildet, um eine werteweise Subtraktion durchzuführen, und zwar dahingehend, daß die Ausgangswerte des Runders 110, also die Werte des zweiten Blocks von gerundeten transformierten Werten von dem ersten Block von diskreten Werten einzeln subtrahiert werden. Bei dem in Fig. 10c gezeigten Ausführungsbeispiel wird es bevorzugt, eine entsprechende Subtraktion durchzuführen, dahingehend, daß ein Wert des zweiten Blocks mit einer Ordnungszahl N+i von einem Wert des ersten Blocks mit der Ordnungszahl i subtrahiert wird, wobei i wieder von 0 bis N-1 läuft. Alternativ können jedoch auch andere Summationen/Subtraktionen durchgeführt werden, dahingehend, daß beispielsweise ein Wert eines Blocks mit der Ordnungszahl N-1 von dem Wert des anderen Blocks mit der Ordnungszahl N subtrahiert wird, solange dies entsprechend bei der inversen Umsetzung berücksichtigt wird.

Die Einrichtung 112 zum Subtrahieren liefert ausgangsseitig bereits einen Block von ganzzahligen Ausgangswerten der transformierten Darstellung, also die ganzzahligen Ausgangswerten $y_0$ bis $y_{N-1}$ der transformierten Darstellung. Um auch, falls dies optional erwünscht ist, die restlichen ganzzahligen Ausgangswerte der transformierten Darstellung, also den weiteren Block $y_N$ bis $y_{2N-1}$ zu erhalten, wird der Block von ganzzahligen Ausgangswerten der transformierten Darstellung, der an dem Ausgang 114 anliegt, einer Transformation unter Verwendung der dritten Transformationsvorschrift durch den Hin-Transformierer 140 unterzogen, wobei die Ausgangswerte desselben wiederum gerundet werden, wie es durch eine Rundungseinrichtung 142 dargestellt ist, um nunmehr einer Addition dieser Werte mit dem zweiten Block von summierten Werten am Ausgang des Summierers 106 durchzuführen, wie es durch das Bezugszeichen 144 in Fig. 10c dargestellt ist. Die Ausgangswerte des Summierers 144 stellen dann einen weiteren Block 146 von ganzzahligen Ausgangswerten der transformierten Darstellung dar, die mit $y_N$ bis $Y_{2N-1}$ bezeichnet sind.

Nachfolgend wird Bezug nehmend auf Fig. 11 eine Vorrichtung zum inversen Umsetzen der transformierten Darstellung gemäß einem Ausführungsbeispiel dargelegt. Es sei darauf hingewiesen, daß durch die in Fig. 11 dargestellte Vorrichtung die durch die in Fig. 10c dargestellte Vorrichtung ausgeführten Operationen verlustlos rückgängig gemacht werden. Fig. 11 entspricht Fig. 10b bis auf die zusätzliche Transformations/Rundungsstufe, um aus dem weiteren Block von transformierten Ausgangswerten den zweiten Block von summierten Werten zu erzeugen, der bei dem in Fig. 10b gezeigten Ausführungsbeispiel in den Eingang 120 eingespeist wird. Es sei darauf hingewiesen, daß die Funktion des Addierens durch die Funktion des Subtrahierens jeweils umgekehrt wird. Ferner sei darauf hingewiesen, daß ein Addierer/Subtrahierer-Paar (144 von Fig. 10c und 128 in Fig. 11) auch mit hinsichtlich des Vorzeichens invertierten Eigangsgrößen beaufschlagt werden kann, so daß der Addierer 144 dann, wenn eine Gruppe von Eingangsgrößen im Vergleich zu dem gezeigten Fall mit negativem Vorzeichen beaufschlagt ist, eigentlich eine Subtraktionsoperation durchführt, solange dies bei dem Gegenstück (128 in Fig. 11) berücksichtigt wird, den dann eigentlich eine Additionsoperation ausführen würde.

Der in Fig. 11 gezeigte Subtrahierer 128, der Addierer 134 sowie der weitere Subtrahierer 154 sind wieder ausgebildet, um eine einzelwertweise Addition/Subtraktion auszuführen, wobei wieder dieselbe Ordnungszahl-Verarbeitung verwendet wird, wie sie auch Bezug nehmend auf Fig. 10c dargelegt worden ist. Würde in Fig. 10c eine andere Ordnungszahl-Verwendung eingesetzt werden, als sie gezeigt ist, so würde dies in Fig. 11 entsprechend berücksichtigt werden.

Am Ausgang des Subtrahierers 134 liegt bereits der erste Block von diskreten Werten 136 vor, die mit $x_0$ bis $x_{N-1}$ bezeichnet sind. Um auch den Rest der rücktransformierten Darstellung zu erhalten, wird der erste Block von diskreten Werten dem Transformierer 150, der mit der ersten Transformationsvorschrift arbeitet, zugeführt, dessen ausgangsseitige Werte durch den Runder 152 gerundet werden und von dem zweiten Block von subtrahierten Werten am Ausgang des Subtrahierers 128 subtrahiert werden, um schließlich auch den zweiten Block von diskreten Werten 156, die mit $x_N$, ..., $x_{2N-1}$ bezeichnet sind, zu erhalten.

Nachfolgend wird Bezug nehmend auf die Fig. 12 - 15 der mathematische Hintergrund der für die Vorrichtungen, wie sie anhand der Fig. 10a, 10b, 10c und 11 dargelegt worden sind, beleuchtet. Durch die dargestellte Vorrichtung zum Umsetzen bzw. zum inversen Umsetzen werden Ganzzahl-Transformationsverfahren für eine verlustfreie Audiocodierung geschaffen, bei denen der Approximationsfehler reduziert ist. Darüber hinaus wird auch der Berechnungsaufwand dahingehend berücksichtigt, daß nicht mehr auf den bekannten Lösungsansatz des Anwendens des Lifting-Schemas auf jede Givens-Rotation aufgebaut wird, wobei hier immer triviale Summen-Differenz-Butterflies auftreten. Diese erhöhen nämlich beträchtlich den Rechenaufwand im Vergleich zu der ursprünglichen nicht-ganzzahligen Version der nachzubildenden Transformation.

Üblicherweise wird das Lifting-Schema verwendet, um eine invertierbare ganzzahlige Approximation einer Givens-Rotation zu erhalten.

$$\begin{pmatrix} \cos\alpha & -\sin\alpha \\ \sin\alpha & \cos\alpha \end{pmatrix} \cong \begin{pmatrix} 1 & \dfrac{\cos\alpha - 1}{\sin\alpha} \\ 0 & 1 \end{pmatrix}\begin{pmatrix} 1 & 0 \\ \sin\alpha & 1 \end{pmatrix}\begin{pmatrix} 1 & \dfrac{\cos\alpha - 1}{\sin\alpha} \\ 0 & 1 \end{pmatrix}$$

Diese ganzzahlige Approximation wird erreicht, indem eine Rundungsfunktion nach jeder Addition, also nach jedem Lifting-Schritt, verwendet wird.

Das Lifting-Schema kann ebenfalls für eine invertierbare ganzzahlige Approximation bestimmter Skalierungsoperationen eingesetzt werden. In der Fachveröffentlichung R. Geiger und G. Schuller, "Integer low delay and MDCT filter banks" Proc. of the Asilomar Conf. on Signals, Systems and Computers, 2002, ist die nachfolgende Lifting-Zerlegung einer 2x2-Skalierungsmatrix mit einer Determinante gleich 1 dargelegt und beschrieben:

$$\begin{pmatrix} d & 0 \\ 0 & d^{-1} \end{pmatrix} = \begin{pmatrix} -1 & 0 \\ d^{-1} & 1 \end{pmatrix}\begin{pmatrix} 1 & -d \\ 0 & 1 \end{pmatrix}\begin{pmatrix} 0 & 1 \\ 1 & d^{-1} \end{pmatrix}$$

Es wird diese Lifting-Zerlegung, die eindimensional ist, also die sich lediglich auf eine 2x2-Skalierungsmatrix bezieht, in den mehrdimensionalen Fall erweitert. Im einzelnen werden alle Werte aus der vorstehenden Gleichung durch nxn-Matrizen ersetzt, wobei n, also die Anzahl der diskreten Werte eines Blocks, größer oder gleich 2 ist. Somit ergibt sich, daß für jede beliebige nxn-Matrix T, die vorzugsweise invertierbar sein soll, die folgende Zerlegung in 2n x 2n-Blockmatrizen möglich ist, wobei $E_n$ die n x n-Einheitsmatrix beschreibt:

$$\begin{pmatrix} T & 0 \\ 0 & T^{-1} \end{pmatrix} = \begin{pmatrix} -E_n & 0 \\ T^{-1} & E_n \end{pmatrix}\begin{pmatrix} E_n & -T \\ 0 & E_n \end{pmatrix}\begin{pmatrix} 0 & E_n \\ E_n & T^{-1} \end{pmatrix}$$

Neben einfachen Operationen, wie Permutationen oder Multiplikationen mit -1 haben alle drei Blöcke dieser Zerlegung die folgende allgemeine Struktur

$$\begin{pmatrix} E_n & 0 \\ A & E_n \end{pmatrix}$$

Für diese 2n x 2n-Blockmatrix kann ein verallgemeinertes Lifting-Schema verwendet werden, das nachfolgend auch als multidimensionales Lifting bezeichnet wird.

Für einen Vektor der Werte x = $(x_0, \ldots , x_{2n-1})$ liefert die Anwendung dieser Blockmatrix folgende Gleichung:

$$\begin{pmatrix} E_n & 0 \\ A & E_n \end{pmatrix}(x_0, \ldots , x_{2n-1}) = ((x_0, \ldots , x_{n-1}), (x_n, \ldots , x_{2n-1}) + A \cdot (x_0, \ldots , x_{n-1}))$$

Es sei darauf hingewiesen, daß auf der rechten Seite der vorstehenden Gleichung ein Vektor steht, dessen Dimension, also dessen Anzahl von Zeilen, gleich 2n ist. Die ersten n-Komponenten, also die Komponenten von 0 bis n-1, entsprechen $x_0$ bis $x_{n-1}$. Die zweiten n-Komponenten, also die zweite Hälfte des Vektors, der sich auf der rechten Seite von der vorstehenden Gleichung ergibt, sind gleich einer Summe des zweiten Blocks von diskreten Werten, also $x_n, \ldots , x_{2n-1}$, jedoch nunmehr summiert mit der Multiplikation der Matrix A, die der Transformationsmatrix von Fig. 10a, 10b, 10c und 11 entspricht, und dem ersten Block von diskreten Werten $x_0, \ldots, x_{n-1}$. Die Transformationsmatrix stellt die erste, zweite bzw. dritte Transformationsvorschrift dar.

Ähnlich zu dem üblichen Lifting-Schema mit 2 x 2-Matrizen der Form

$$\begin{pmatrix} 1 & a \\ 0 & 1 \end{pmatrix}$$

können diese 2n x 2n-Matrizen für invertierbare Ganzzahl-Approximationen der Transformation T folgendermaßen verwendet werden. Für ganzzahlige Eingangswerte $(x_0, \ldots, x_{2n-1})$ werden die Gleitkommaausgangswerte $(y_0, \ldots, y_{n-1}) = A \cdot (x_0, \ldots, x_{n-1})$ gerundet, und zwar auf ganzzahlige Werte, bevor sie zu den ganzzahligen Werten $(x_n, \ldots, x_{2n-1})$ addiert werden. Die Inverse der Blockmatrix ergibt sich folgendermaßen:

$$\begin{pmatrix} E_n & 0 \\ A & E_n \end{pmatrix}^{-1} = \begin{pmatrix} E_n & 0 \\ -A & E_n \end{pmatrix}$$

Somit kann dieser Prozeß ohne Fehler invertiert werden, indem einfach dieselbe Matrix A und dieselbe Rundungsfunktion verwendet wird, und indem die resultierenden Werte statt der Addierung bei der Hin-Verarbeitung nunmehr subtrahiert werden. Die Hin-Verarbeitung ist in Fig. 13 dargestellt, während die Rück-Verarbeitung in Fig. 14 dargestellt ist. Es sei darauf hingewiesen, daß die Transformationsmatrix in Fig. 13 zu der Transformationsmatrix in Fig. 14 identisch ist, was aus Einfachheitsgründen der Implementierung bevorzugt wird.

Nachdem die Werte $(x_0, \ldots, x_{n-1})$ im Vorwärtsschritt, der in Fig. 13 gezeigt ist, nicht modifiziert werden, sind sie für den inversen Schritt, also für den Rückwärtsschritt in Fig. 14, noch vorhanden. Es sei darauf hingewiesen, daß es keine speziellen Restriktionen für die Matrix A gibt. Dieselbe muß daher nicht notwendigerweise invertierbar sein.

Um eine invertierbare ganzzahlige Approximation der bekannten MDCT zu erhalten, wird die MDCT in einer ersten Stufe in Givens-Rotationen zerlegt, wobei diese Stufe die Fensterungsstufe ist, und in eine nachfolgende DCT-IV-Stufe. Diese Zerlegung ist in der nachfolgend noch erläuterten Fig. 3 dargelegt und in der DE 10129240 A1 detailliert beschrieben.

Im Gegensatz zum Stand der Technik, bei dem die DCT-IV in mehrere Stufen von Givens-Rotationen zerlegt wird, wird die Transformation selbst belassen und anschließend gerundet.

Bekannterweise wird somit die ganzzahlige Approximation der DCT-IV durch mehrere Stufen von Lifting-basierten Givens-Rotationen durchgeführt. Die Anzahl von Givens-Rotationen wird durch den zugrundeliegenden verwendeten schnellen Algorithmus bestimmt. So ist die Anzahl von Givens-Rotationen durch O (N log N) für eine Transformation der Länge N gegeben. Die Fensterungsstufe jeder MDCT-Zerlegung besteht nur aus N/2 Givens-Rotationen oder aus 3N/2 Rundungsschritten. So gibt besonders bei Transformationslängen, die hoch sind, wie sie in Audiocodieranwendungen verwendet werden (beispielsweise 1.024), die ganzzahlige Approximation der DCT-IV den Hauptbeitrag für den Approximationsfehler.

Der Lösungsansatz verwendet das beschriebene multidimensionale Lifting-Schema. Damit wird die Anzahl der Rundungsschritte in der $DCT_{IV}$ auf 3N/2 reduziert, also gleich der Anzahl von Rundungsschritten in der Fensterungsstufe gemacht, und zwar im Vergleich zu ungefähr $2N \log_2 N$ Rundungsschritten bei dem konventionellen Lifting-basierten Lösungsansatz.

Es wird die DCT-IV auf zwei Blöcke von Signalen gleichzeitig angewendet. Eine Möglichkeit hierzu ist in Fig. 12 dargestellt, wo einfach beispielsweise zwei zeitlich aufeinanderfolgende Blöcke von Abtastwerten einer DCT-IV unterzogen werden. Die beiden Blöcke, die den beiden Transformationen unterzogen werden, können jedoch auch Abtastwerte von zwei Kanälen eines Mehrkanalsignals sein.

Die Zerlegung aus der vorstehend beschriebenen mehrdimensionalen Lifting-Gleichung wird auf die Transformationsvorschrift angewendet, die auch als N x N-Matrix betrachtet werden kann. Da die Inverse insbesondere bei der DCT-IV wieder die DCT-IV ist, ergibt sich folgende Zerlegung für das in Fig. 12 gezeigte Konzept:

$$\begin{pmatrix} DCT_{IV} & 0 \\ 0 & DCT_{IV} \end{pmatrix} = \begin{pmatrix} -E_N & 0 \\ DCT_{IV} & E_N \end{pmatrix}\begin{pmatrix} E_N & -DCT_{IV} \\ 0 & E_N \end{pmatrix}\begin{pmatrix} 0 & E_N \\ E_N & DCT_{IV} \end{pmatrix}$$

Die Permutationen der Multiplikationen mit -1 können in eigene Blockmatrizen extrahiert werden, so daß sich der folgende Zusammenhang ergibt:

$$\begin{pmatrix} DCT_{IV} & 0 \\ 0 & DCT_{IV} \end{pmatrix} = \begin{pmatrix} -E_N & 0 \\ 0 & E_N \end{pmatrix}\begin{pmatrix} E_N & 0 \\ DCT_{IV} & E_N \end{pmatrix}\begin{pmatrix} E_N & -DCT_{IV} \\ 0 & E_N \end{pmatrix}\begin{pmatrix} E_N & 0 \\ DCT_{IV} & E_N \end{pmatrix}\begin{pmatrix} 0 & E_N \\ E_N & 0 \end{pmatrix}$$

Somit kann die Anwendung einer Transformation auf zwei Blöcke von Signalen, also auf zwei Blöcke von diskreten Werten, mit vorzugsweise drei multidimensionalen Lifting-Schritten erhalten werden:

$$\begin{pmatrix} E_N & 0 \\ DCT_{IV} & E_N \end{pmatrix}\begin{pmatrix} E_N & -DCT_{IV} \\ 0 & E_N \end{pmatrix}\begin{pmatrix} E_N & 0 \\ DCT_{IV} & E_N \end{pmatrix}$$

Die vorstehende Gleichung ist in Fig. 10c anhand eines Ausführungsbeispiels graphisch dargestellt. Das inverse Umsetzen ist, wie es ausgeführt worden ist, in Fig. 11 entsprechend illustriert.

Mit dem Lösungsansatz können zwei DCT-IV-Transformationen der Länge N auf invertierbare Art und Weise implementiert werden, wobei nur 3N Rundungsschritte benötigt werden, also 3N/2 Rundungsschritte pro Transformation.

Die DCT-IV in den drei mehrdimensionalen Lifting-Schritten kann eine beliebige Implementierung haben, also beispielsweise eine Gleitkomma- oder eine Festkomma-basierte Implementierung. Sie muß nicht einmal invertierbar sein. Sie muß nur genau auf dieselbe Art und Weise im Vorwärts- und im Rückwärtsprozeß durchgeführt werden. Dies führt dazu, daß dieses Konzept für hohe Transformationslängen, wie beispielsweise 1.024, geeignet ist, wie sie bei aktuellen Audiocodieranwendungen verwendet werden.

Die gesamte Rechenkomplexität ist gleich dem 1,5-fachen der Rechenkomplexität der nicht-ganzzahligen Implementierung der beiden DCT-IV-Transformationen. Diese Rechenkomplexität ist immer noch deutlich niedriger als für herkömmliche Lifting-basierte ganzzahlige Implementierungen, die etwa doppelt so komplex wie die herkömmliche DCT-IV ist, da diese Implementierungen die trivialen Plus/Minus-Butterflies basierend auf dem verwendeten Lifting-Schema verwenden müssen, um eine Energieerhaltung zu erreichen, wie es in R. Geiger, T. Sporer, J. Koller und K. Brandenburg, "Audio Coding based on Integer Transforms" in 111th AES Convention, New York, 2001, beschrieben ist.

Der dargestellte Lösungsansatz wird wenigstens zwei DCT-IV-Transformationen gewissermaßen gleichzeitig, also innerhalb einer Umsetzung berechnen. Dies kann beispielsweise erreicht werden, indem die DCT-IV-Transformation für zwei aufeinanderfolgende Blöcke des Audiosignals oder zwei aufeinanderfolgende Bilder eines Bildsignals berechnet wird. Im Falle eines Zwei-Kanal-Stereosignals kann dies auch erreicht werden, indem die DCT-IV des linken und des rechten Kanals in einer Umsetzungsaktion bzw. inversen Umsetzungsaktion berechnet wird. Die erste Version führt eine zusätzliche Verzögerung von einem Block in das System ein. Die zweite Version ist für Stereokanäle bzw. allgemein gesagt für Mehrkanalsignale möglich.

Alternativ, wenn beide Optionen nicht erwünscht sind, wenn jedoch eine normale Blockverarbeitungslänge von N Werten beibehalten werden soll, kann auch die DCT-IV der Länge N zerlegt werden in zwei DCT-IV-Transformationen der Länge N/2. In diesem Zusammenhang wird auf Y. Zeng, G. Bi und Z. Lin, "Integer sinusoidal transforms based on lifting factorization", in Proc. ICASSP'01, Mai 2001, S. 1.181 - 1.184, verwiesen, wo diese Zerlegung ausgeführt wird. Zusätzlich zu den beiden DCT-Transformationen der Länge N/2 werden noch einige zusätzliche Stufen von Givens-Rotationen benötigt. In diesem Algorithmus wird ferner eine Blockmatrix

$$\begin{pmatrix} E_{N/2} & - & E_{N/2} \\ E_{N/2} & & E_{N/2} \end{pmatrix},$$

d. h. N/2 Plus/Minus-Butterflies, eine Blockdiagonalmatrix mit N/2-Givens-Rotationen und ferner einige Permutatiönsmatrizen angewendet. Unter Verwendung dieser zusätzlichen Stufen von N/2-Givens-Rotationen kann der multidimensionale Lifting-Approach auch für die Berechnung nur einer DCT-IV der Länge N verwendet werden. Die Grundstruktur dieses Algorithmus ist in Fig. 15 dargestellt, wo neben der eigentlichen Umsetzungsstufe, in der zwei DCT-IV-Transformationen mit der Länge N/2 verwendet werden, zunächst eine Butterfly-Stufe vorhanden ist, um den ersten und den zweiten Block von diskreten Werten, welche nunmehr jedoch lediglich eine Länge von N/2 haben, zu berechnen. Ausgangsseitig ist ferner eine Rotationsstufe vorgesehen, um aus dem Block von Ausgangswerten der transformierten Darstellung und dem weiteren Block von Ausgangswerten der transformierten Darstellung, welche nunmehr jedoch lediglich jeweils N/2 Werte haben, die Ausgangswerte $y_0$, ..., $y_{N-1}$ zu erhalten, die gleich den Ausgangswerten einer DCT-IV-Operation von Fig. 12 sind, wie es bei einem Vergleich der Indizes eingangsseitig und ausgangsseitig von Fig. 15 und Fig. 12 ersichtlich wird.

Bisher wurde lediglich die Anwendung des mehrdimensionalen Liftings auf Blockmatrizen folgender Form dargelegt.

$$\begin{matrix} T & 0 \\ 0 & T^{-1} \end{matrix}$$

Dennoch ist es auch möglich, andere Blockmatrizen in mehrdimensionale Lifting-Schritte zu zerlegen. Beispielsweise kann die folgende Zerlegung verwendet werden, um die Kombination von einer Stufe mit normierten Plus/Minus-Butterflies und zwei Blöcken von DCT-IV-Transformationen durch drei Schritte des multidimensionalen Liftings zu implementieren:

$$\frac{1}{\sqrt{2}} \begin{pmatrix} E_N & E_N \\ - E_N & E_N \end{pmatrix} \begin{pmatrix} DCT_{IV} & 0 \\ 0 & DCT_{IV} \end{pmatrix} = \begin{pmatrix} \frac{1}{\sqrt{2}} DCT_{IV} & \frac{1}{\sqrt{2}} DCT_{IV} \\ - \frac{1}{\sqrt{2}} DCT_{IV} & \frac{1}{\sqrt{2}} DCT_{IV} \end{pmatrix} =$$

$$\begin{pmatrix} E_N & 0 \\ E_N & - \sqrt{2}DCT_{IV} & E_N \end{pmatrix} \begin{pmatrix} E_N & \frac{1}{\sqrt{2}} DCT_{IV} \\ 0 & E_N \end{pmatrix} \begin{pmatrix} E_N & 0 \\ E_N & - \sqrt{2}DCT_{IV} & E_N \end{pmatrix}$$

Aus der vorstehenden Gleichung wird ersichtlich, daß die erste Transformationsvorschrift, die in der linken Klammer der vorstehenden Gleichung verwendet wird, und die zweite Transformationsvorschrift, die in der mittleren Klammer der vorstehenden Gleichung verwendet wird, und die dritte Transformationsvorschrift, die in der letzten Klammer der vorstehenden Gleichung verwendet wird, nicht identisch sein müssen. Des weiteren wird aus der vorstehenden Gleichung ersichtlich, daß nicht nur Blockmatrizen zerlegt werden können, bei denen lediglich die Hauptdiagonalelemente besetzt sind, sondern daß auch voll besetzte Matrizen verarbeitet werden können. Ferner sei darauf hingewiesen, daß man nicht darauf begrenzt ist, daß die Transformationsvorschriften, die beim Umsetzen in eine transformierte Darstellung verwendet werden, identisch sein müssen oder gar irgendeinen Bezug zueinander haben müssen, derart, daß beispielsweise die zweite Transformationsvorschrift die Rückwärts-Transformationsvorschrift zu der ersten Transformationsvorschrift ist. Grundsätzlich könnten auch drei voneinander unterschiedliche Transformationsvorschriften verwendet werden, solange dies bei der inversen Darstellung berücksichtigt wird.

In diesem Zusammenhang wird noch einmal auf Fig. 10c und Fig. 11 Bezug genommen. Bei der Umsetzung der diskreten Werte in eine transformierte Darstellung kann die Einrichtung 102 ausgebildet sein, um irgendeine Transformationsvorschrift 1 zu implementieren. Ferner kann die Einrichtung 108 ebenfalls ausgebildet sein, um irgendeine andere oder gleiche Transformationsvorschrift zu verwenden, die als Transformationsvorschrift 2 bezeichnet ist. Ferner kann die Einrichtung 140 ausgebildet sein, um allgemein irgendeine Transformationsvorschrift 3 zu verwenden, die nicht notwendigerweise gleich der ersten oder der zweiten Transformationsvorschrift sein muß.

Bei der inversen Umsetzung der transformierten Darstellung muß jedoch eine Anpassung an die in Fig. 10c dargelegten Transformationsvorschriften 1 - 3 gefunden werden, dahingehend, daß die erste Einrichtung 124 zum Umsetzen nicht irgendeine Transformationsvorschrift ausführt, sondern die Transformationsvorschrift 3, die im Block 140 von Fig. 10c ausgeführt worden ist. Entsprechend muß die Einrichtung 130 in Fig. 11 die Transformationsvorschrift 2 ausführen, die auch durch den Block 108 in Fig. 10c ausgeführt worden ist. Schließlich muß die Einrichtung 150 von Fig. 11 die Transformationsvorschrift 1 ausführen, die auch durch die Einrichtung 102 von Fig. 10c ausgeführt worden ist, damit eine verlustlose inverse Umsetzung erhalten wird.

Fig. 16 zeigt eine Modifikation des in Fig. 10C beschriebenen Konzepts. Insbesondere werden die Rundungen in den Elementen 104, 110, 142 für die Hintranformation oder in den Elementen 126, 132, 152 in der Rücktransformation nicht mehr abtastwertweise ausgeführt, sondern derart, daß eine spektrale Formung des Rundungsfehlers stattfindet.

Beim Vergleich von Fig. 10C mit Fig. 16 ist zu sehen, daß es bevorzugt wird, lediglich den Block 104 durch den Block 204a zu ersetzen, und den Block 204b statt des Rundungsblocks 110 zu verwenden. Dies ist der Fall, da das Konzept besonders dann von besonderem Vorteil ist, wenn eine nachfolgende Transformation in den Frequenzbereich stattfindet, wo das weiße Rauschen des Rundungsfehlers, wenn keine Spektralformung durchgeführt wird, problematisch ist. Nachdem nach dem Runden 142 keine Frequenztransformation mehr stattfindet, würde eine Spektralformung im Block 142 nicht mehr den Vorteil mit sich bringen. Sehr wohl trifft dies jedoch für den Block 204a zu, da durch die Transformation im Block 108 wieder eine Frequenzumsetzung stattfindet. Die erfindungsgemäße Spektralformung im Block 204b ist somit ebenfalls noch von Vorteil, da durch den letzten Block 140 wieder eine Transformation stattfindet. Dennoch, wie es anhand von Fig. 16 zu sehen ist, geht jedoch der rauschgeformte Rundungsfehler bereits ein in den Ausgangsblock 114, so daß auch bereits im Block 204b statt des Spektralformens des Rundungsfehlers eine übliche Rundung, wie sie in Fig. 10C durch die Blöcke 110 dargestellt ist, durchgeführt werden könnte.

Ob man am Ende der zweiten Transformation, also der Transformation 108, spektralformungsmäßig rundet oder üblicherweise rundet, also mit einem Rundungsfehler, der eine weiße Spektralverteilung hat, wird vom einzelnen Anwendungsfall abhängen.

Erfindungsgemäß wird somit das unabhängige Runden von einer bestimmten Anzahl von z. B. k Werten durch ein Runden mit spektraler Formung ersetzt, das auch als "abhängiges Runden" bezeichnet werden kann.

Aus der vorstehenden Diskussion anhand von Fig. 16 wird erkennbar, daß sich die spektrale Formung des Rundungsfehlers ebenfalls auch bei der für die IntMDCT erforderlichen ganzzahligen DCT einsetzen läßt. Jedoch ist hier, wie es ausgeführt worden ist, zu beachten, daß die spektrale Formung durch Fehlerrückkopplung nur dann von besonderem Vorteil ist, wenn es sich bei den zu rundenden Werten um Zeitsignale handelt, die durch einen weiteren Transformationsschritt in den Frequenzbereich übergeführt werden. Daher ist, wie es anhand des Multidimensional-Liftings von Fig. 16 dargestellt worden ist, in den ersten beiden Schritten die spektrale Formung von Vorteil, jedoch im dritten Schritt nicht mehr unbedingt von Vorteil.

Es sei darauf hingewiesen, daß Fig. 16 den erfindungsgemäß zu Fig. 10C korrespondierenden Fall in einem Codierer zeigt. Der zur Fig. 16 korrespondierende Fall im Decodierer ergibt sich unmittelbar aus einem Vergleich von Fig. 16 und Fig. 11. Der unmittelbar zu Fig. 16 korrespondierende Decodierer ergibt sich aus Fig. 11 dahingehend, daß alle Blöcke identisch arbeiten, außer den beiden Rundungsblöcken 132, 152. Diese beiden Rundungsblöcke arbeiten in Fig. 11 als unabhängige Rundungsblöcke und würden beim erfindungsgemäßen Decodierer durch Abhängig-Runden-Blöcke 204a, 204b ersetzt werden, die alle z. B. den anhand von Fig. 2c gezeigten Aufbau haben. Insbesondere sei darauf hingewiesen, daß beim Decodierer genau derselbe Spektralformungsrundungsalgorithmus einzusetzen ist wie beim Codierer.

Das in Fig. 2b und Fig. 2c dargestellte Konzept, insbesondere für H(z) = "-1", eignet sich ferner auch besonders dazu, eine Reduktion des Rundungsfehlers und insbesondere eine Reduktion des Rundungsfehlers bei Ganzzahltransformationen zu verwenden. Eine solche Reduktion des Rundungsfehlers ist immer dann möglich, wenn zwei Fließkommawerte gerundet und zu demselben Wert, anstatt zu verschiedenen Werten, addiert werden. Eine solche beispielhafte Situation ist in Fig. 17 dargestellt. Hier existiert zunächst ein erster Lifting-Schritt mit einer Sequenz aus unten-oben-unten zwischen den Lifting-Teilnehmern $x_1$ und $x_3$. Ferner existiert eine zweite Lifting-Sequenz mit der bekannten Sequenz aus unten-oben-unten, nun jedoch mit den Lifting-Teilnehmern $x_2$ und $x_3$. Insbesondere wird der bei der ersten Lifting-Operation erhaltene Wert $x_3$ dafür verwendet, um als Additionspartner im zweiten Lifting-Schritt zu dienen, wie es aus Fig. 17 zu sehen ist. Es wird wieder darauf hingewiesen, daß dann, wenn ein Pfeil auf einer waagrechten Linie ankommt, dies eine Addition darstellt. In anderen Worten ausgedrückt wird somit ein Wert, der gerade gerundet worden ist, zu dem Wert, der der waagrechten Linie entspricht, hinzuaddiert.

Im einzelnen wird bei dem in Fig. 17 gezeigten Beispiel der Wert $x_1$ zunächst gewichtet (Block 250) und dann individuell gerundet (Block 252). Das Ausgangssignal des Blocks 252 wird zu $x_3$ hinzuaddiert (Block 254). Dann wird das Ergebnis des Addierens 254 wieder gewichtet (Block 256) und wieder gerundet (Block 258). Das Ergebnis dieser Rundung 258 wird nunmehr zu $x_1$ hinzuaddiert (260). Das Ergebnis der Addition 260 wird wieder gewichtet (Block 262) und gerundet (Block 264), um zu dem aktuellen Wert von $x_3$ hinzuaddiert zu werden (zu Block 266). Entsprechend wird der Wert $x_2$ durch einen Block 270 gewichtet und dann durch einen Block 272 gerundet. Das Ergebnis des Blocks 272 wird zu dem nunmehr aktuellen Wert von $x_3$ hinzuaddiert (274). Dann wird wieder gewichtet (276) und gerundet (278), um das Ergebnis des Blocks 278 wieder zu dem aktuellen Wert von $x_2$ hinzuzuaddieren (280). Das Ergebnis dieser Addition 280 wird wieder gewichtet (Block 282) und das gewichtete Ergebnis wird gerundet (Block 284), um dann das Ergebnis des Rundungsblocks 284 wieder zu dem nunmehr gerade aktuellen Wert von $x_3$ hinzuzuaddieren (Block 286), um einen Ergebniswert für $x_3$ zu erhalten. Aus Fig. 17 ist zu sehen, daß zunächst ein erster Wert, nämlich das Ergebnis des Block 262, gerundet wird und dann zu $x_3$ hinzuaddiert wird. Darüber hinaus wird ein zweiter Wert, nämlich das Ergebnis des Blocks 270, ebenfalls gerundet (Block 272) und dann zu dem Wert $x_3$ hinzuaddiert (Addierer 274). Es tritt also die Situation auf, daß hintereinander zwei Fließkommawerte gerundet und zu demselben Wert, anstatt zu verschiedenen Werten, addiert werden. Bei dem in Fig. 17 gezeigten Beispiel wird das Ergebnis des dritten und des vierten Lifting-Schritts zum selben Wert, nämlich $x_3$, addiert, man addiert also mit der Rundungsfunktion [.]:

$$[x_1 \cdot cs_1] + [x_2 \cdot cs_2]$$

Wird der Fehler des dritten Lifting-Schritts beim Runden im vierten Lifting-Schritt eingespeist, so läßt sich in diesem Fall der Fehler des dritten Schritts verwenden, und es entsteht nur ein Rundungsfehler, anstatt von zwei Rundungsfehlern. Rechnerisch ergibt sich dies aus folgendem Zusammenhang:

$$[x_1 \cdot cs_1] + [x_2 \cdot cs_2 + (x_1 \cdot cs_1 - [x_1 \cdot cs_1])] =$$
$$[x_1 \cdot cs_1] + [x_2 \cdot cs_2 + x_1 \cdot cs_1] - [x_1 \cdot cs_1] =$$
$$[x_2 \cdot cs_2 + [x_1 \cdot cs_1]$$

Rechnerisch ist damit das Einspeisen des Rundungsfehlers in den nächsten Rundungsschritt in diesem Fall identisch mit einer Addition der Werte und einer anschließenden Rundung. Diese Situation ist in Fig. 18 dargestellt, wobei Fig. 18 Fig. 17 entspricht, während jedoch die beiden getrennten Rundungsblöcke 264, 272 und die beiden getrennten Addierer 266, 274 ersetzt sind durch einen Block 268, der ausgebildet ist, um die vorstehende Gleichung zu implementieren. Es werden daher die Ergebnisse der beiden Blöcke 262 und 270 zunächst in ungerundeter Form addiert und dann gerundet. Damit wird der Rundungsfehler in günstigen Fällen bis zur Hälfte reduziert. Am Ausgang des Blocks 268 ergibt sich nunmehr lediglich ein einziger Wert, der durch einen Addierer 269 zu $x_3$ hinzuaddiert wird.

Eine Kombination von Reduktion und Formung des Rundungsfehlers kann ebenfalls auftreten, beispielsweise dann, wenn ein Satz von Givens-Rotationen und ein multidimensionaler Lifting-Schritt aufeinanderfolgen, wie es anhand von Fig. 19 dargestellt ist. Hierbei wird lediglich beispielhaft von Werten $x_1$ bis $x_4$ der letzte Schritt einer Unten-Oben-Unten-Sequenz für mehrere Werte durchgeführt, also beispielsweise der Unten-Schritt 31c von Fig. 9. Diese Werten sollen nunmehr zu entsprechenden Werten hinzuaddiert werden, zu denen auch die gerundeten Werte in Fig. 16, also die Werte am Ausgang des Blocks 204a, hinzuaddiert werden sollen. In diesem Fall wird es bevorzugt, die ungerundeten Werte zunächst zu addieren, nämlich durch die in Fig. 19 gezeigten Addierer 203, um dann die addierten Werte im Block 204 in Fig. 19 zu runden und dabei gleichzeitig einer Rauschformung zu unterziehen, derart, daß dann nur ein einfacher Rundungsfehler erhalten wird, und die Ausgangswerte nach der Addition durch die Addierer 106 weniger fehlerbehaftet sind. Die Situation in Fig. 19 ergibt sich somit dann, wenn Fig. 9 links neben Fig. 16 gelegt wird, und insbesondere dann, wenn statt einer N-Werte-DCT-IV eine N/2-Werte-DCT-IV verwendet wird.

Erfindungsgemäß wird somit bevorzugt, die Reduktion des Rundungsfehlers mit der Formung des Rundungsfehlers zu kombinieren. Im Fall der Reduktion des Rundungsfehlers werden somit mehrere Eingangswerte verarbeitet und gemeinsam gerundet, wobei die gerundeten Werte zu einem Wert hinzuaddiert werden, während im Fall der spektralen Formung des Rundungsfehlers die gerundeten Werte unabhängig voneinander gerundet werden und zu mehreren jeweils unterschiedlichen anderen Werten hinzuaddiert werden.

Ferner sei darauf hingewiesen, daß die Situation in Fig. 19 auch dann auftreten kann, wenn, wie es anhand von Fig. 15 dargestellt ist, N/2-DCTs verwendet werden. Hierbei existiert vor der Umsetzungsstufe, also vor den beiden DCT-Blöcken, die in Fig. 15 als Butterfly-Stufe bezeichnete Stufe, bei der die Eingangswerte $x_0$ bis $x_{N/2-1}$ entsprechend gewichtet und gerundet werden, um dann zu denselben Werten hinzuaddiert zu werden, zu denen auch die Werte einer DCT-IV-Stufe hinzuaddiert werden. Ferner sei darauf hingewiesen, daß die Umsetzungsstufe in Fig. 15 lediglich schematisch dargestellt ist. Die beiden in Fig. 15 schematisch dargestellten DCT-IV-Blöcke würden in einer praktischen Implementierung durch die in Fig. 16 gezeigten Komponenten ersetzt werden, wenn in Fig. 16 statt $x_{N-1}$ $X_{N/2-1}$ geschrieben wird und wenn statt $x_{N/2}$ geschrieben wird, und wenn statt $x_{N/2-1}$ $x_{N-1}$ geschrieben wird.

Damit zeigt Fig. 19 eine bevorzugte Implementierung insbesondere für Monoapplikationen, also für den Fall, bei dem eine N/2-DCT-IV eingesetzt werden soll.

Abhängig von den Gegebenheiten kann das erfindungsgemäße Verfahren zum Verarbeiten eines Signals mit einer Sequenz von diskreten Werten in Hardware oder in Software implementiert werden. Die Implementierung kann auf einem digitalen Speichermedium, insbesondere einer Diskette oder CD mit elektronisch auslesbaren Steuersignalen, erfolgen, die so mit einem programmierbaren Computersystem zusammenwirken können, daß das Verfahren ausgeführt wird. Allgemein besteht die Erfindung somit auch in einem Computerprogrammprodukt mit einem auf einem maschinenlesbaren Träger gespeicherten Programmcode zur Durchführung des erfindungsgemäßen Verfahrens, wenn das Computerprogrammprodukt auf einem Rechner abläuft. In anderen Worten ist die Erfindung somit auch ein Computerprogramm mit einem Programmcode zur Durchführung des Verfahrens, wenn das Computerprogramm auf einem Computer abläuft.

**Patentansprüche**

1. Vorrichtung zum Verarbeiten eines Signals mit einer Sequenz von diskreten Werten, welche Audiodaten, Bilddaten oder Videodaten darstellen, wobei ein erster Frequenzbereich existiert, in dem das Signal eine hohe Energie hat, und wobei ein zweiter Frequenzbereich existiert, in dem das Signal eine niedrige Energie hat, mit folgenden Merkmalen:

   einer Einrichtung (202) zum Manipulieren der Sequenz von diskreten Werten, um eine Sequenz von manipulierten Werten zu erhalten, so daß zumindest einer der manipulierten Werte nicht-ganzzahlig ist; und
   einer Einrichtung (204) zum Runden der Sequenz von manipulierten Werten, um eine Sequenz von gerundeten ganzzahligen manipulierten Werten zu erhalten, wobei die Einrichtung (204) zum Runden ausgebildet ist, um eine spektrale Formung eines erzeugten Rundungsfehlers so zu bewirken, daß ein spektral geformter Rundungsfehler in dem ersten. Frequenzbereich eine höhere Energie hat als in dem zweiten Frequenzbereich.

2. Vorrichtung nach Anspruch 1, bei der das Signal ein Zeitsignal ist, bei der die diskreten Werten zeitdiskrete Werte sind und die ferner folgende Merkmale aufweist:

   eine Einrichtung (208) zum Umsetzen zumindest der Sequenz von gerundeten manipulierten Werten oder einer Sequenz, die von der Sequenz von gerundeten manipulierten Werten abgeleitet ist, in eine spektrale Darstellung mit Spektralkoeffizienten, die in dem ersten Frequenzbereich stärker rundungsfehlerbehaftet sind als in dem zweiten Frequenzbereich; und
   eine Einrichtung (208) zum Codieren der spektralen Darstellung.

3. Vorrichtung nach Anspruch 1 oder 2, bei der der erste Frequenzbereich ein Bereich niedriger Frequenzen ist, bei der der zweite Frequenzbereich ein Bereich hoher Frequenzen ist und bei der die Einrichtung (204) zum Runden ausgebildet ist, um die spektrale Formung unter Verwendung einer Tiefpaßcharakteristik zum Filtern eines rückgekoppelten Fehler e(n) zu bewirken.

4. Vorrichtung nach einem der vorhergehenden Ansprüche,
   bei der die Einrichtung (204) zum Runden ausgebildet ist, um einen ersten diskreten Wert zu runden (218), um einen bei einer Rundung des diskreten Werts entstandenen Rundungsfehler zu bestimmen (214), um den Rundungsfehler zu bewerten (220), und um den bewerteten Rundungsfehler mit einem zweiten diskreten Wert, der dem ersten diskreten Wert in der Sequenz benachbart ist, zu kombinieren (210), um einen kombinierten Wert zu erhalten, und um den kombinierten Wert zu runden (218), um eine gerundete Version des zweiten Werts zu erhalten.

5. Vorrichtung nach einem der vorhergehenden Ansprüche,
   bei der die Einrichtung (204) zum Runden ausgebildet ist, um den Rundungsfehler mit einer Rundungsfunktion zu bewerten, deren Übertragungsfunktion gleich "-1" ist.

6. Vorrichtung nach einem der vorhergehenden Ansprüche,

bei der die diskreten Werte ganzzahlige Werte sind.

7. Vorrichtung nach einem der vorhergehenden Ansprüche,
bei der die Einrichtung (204) zum Runden ausgebildet ist, um gerundete Werte zu erzeugen, die eine geringere Genauigkeit haben als die manipulierten Werte.

8. Vorrichtung nach einem der vorhergehenden Ansprüche, die ausgebildet ist, um als Verarbeitung eine ganzzahlige Fensterung oder eine ganzzahlige inverse Fensterung durchzuführen,
wobei das Signal N/2 diskrete Werte aus einem Block von 2N diskreten Werten umfaßt,
wobei die Einrichtung (202a) zum Manipulieren ausgebildet ist, um jeden der N/2 diskreten Werte mit einem durch einen ersten Lifting-Schritt bestimmten Wert zu gewichten,
wobei die Vorrichtung ferner einen ersten Addierer (205a) zum werteweisen Addieren der Sequenz von gerundeten manipulierten Werten zu einer Sequenz mit weiteren N/2 diskreten Werten des Blocks von 2N diskreten Werten aufweist, um eine erste Sequenz von addierten Werten zu erhalten,
wobei die Vorrichtung ferner eine weitere Einrichtung (202b) zum Manipulieren aufweist, um jeden Wert der ersten Sequenz von addierten Werten mit einem durch einen zweiten Lifting-Schritt bestimmten Wert zu gewichten, um eine weitere Sequenz von manipulierten Werten zu erhalten,
wobei die Vorrichtung eine weitere Einrichtung (204b) zum Runden aufweist, um eine weitere Sequenz von gerundeten manipulierten Werten zu erhalten,
wobei die Vorrichtung einen zweiten Addierer (205b) zum werteweisen Addieren aufweist, um eine zweite Sequenz von addierten Werten zu erhalten,
wobei die Vorrichtung noch eine weitere Einrichtung (202c) zum Manipulieren aufweist, um jeden Wert der zweiten Sequenz von addierten Werten mit einer durch einen dritten Lifting-Schritt bestimmten Wert zu gewichten, um noch eine weitere Sequenz von manipulierten Werten zu erhalten,
wobei die Vorrichtung ferner noch eine weitere Rundungseinrichtung (204c) umfaßt, um noch eine weitere Sequenz von gerundeten manipulierten Werten zu erhalten,
wobei die Vorrichtung ferner einen dritten Addierer (205c) umfaßt, um eine dritte Sequenz von addierten Werten zu erhalten,
wobei die noch weitere Sequenz von manipulierten Werten N/2 gefensterte oder invers gefensterte Werte sind, und
wobei die dritte Sequenz von addierten Werten weitere N/2 gefensterte oder invers gefensterte Werte sind.

9. Vorrichtung nach Anspruch 8,
bei der die Einrichtung zum Manipulieren ausgebildet ist, um als Gewichtungsfaktoren für die N/2 Werte folgende Faktoren zu verwenden:

$$GF_k = (\cos\alpha - 1)/\sin\alpha,$$

wobei $GF_k$ der Gewichtungsfaktor für den Wert mit einem Ordnungsindex k ist und wobei $\alpha$ einen Winkel darstellt, für den folgenden Gleichung gilt:

$$\alpha = \arctan[w(N/2-1-k) \, / \, w(N/2 + k)]$$

wobei k zwischen 0 und N/2-1 läuft und wobei w eine Fensterfunktion darstellt.

10. Vorrichtung nach Anspruch 9,
bei der die Einrichtung zum Manipulieren ausgebildet ist, um als Gewichtungsfaktoren für die N/2 Werte folgende Faktoren zu verwenden:

$$GF_k = \sin\alpha$$

wobei GF$_k$ der Gewichtungsfaktor für den Wert mit einem Ordnungsindex k ist und wobei $\alpha$ einen Winkel darstellt, für den folgenden Gleichung gilt:

$$\alpha = \text{arctan}[w(N/2-1-k) \,/\, w(N/2 + k)]$$

wobei k zwischen 0 und N/2-1 läuft und wobei w eine Fensterfunktion darstellt.

11. Vorrichtung nach einem der Ansprüche 8, 9 oder 10, bei der die noch weitere Einrichtung zum Manipulieren ausgebildet ist, um als Gewichtungsfaktoren für die N/2 Werte folgende Faktoren zu verwenden:

$$GF_k = (\cos \alpha - 1)/\sin \alpha,$$

wobei GF$_k$ der Gewichtungsfaktor für den Wert mit einem Ordnungsindex k ist und wobei $\alpha$ einen Winkel darstellt, für den folgenden Gleichung gilt:

$$\alpha = \text{arctan}[w(N/2-1-k) \,/\, w(N/2 + k)]$$

wobei k zwischen 0 und N/2-1 läuft und wobei w eine Fensterfunktion darstellt.

12. Vorrichtung nach einem der Ansprüche 8 bis 11, die für eine Fensterung ausgebildet ist und der ferner eine Einrichtung (206) zum Umsetzen nachgeschaltet ist oder die für eine inverse Fensterung ausgebildet ist und der eine Einrichtung zum inversen Umsetzen von einem Spektralbereich in einen Zeitbereich vorgeschaltet ist.

13. Vorrichtung nach Anspruch 12, bei der die Einrichtung zum inversen Umsetzen oder die Einrichtung zum Umsetzen eine DCT-IV-Einrichtung umfaßt.

14. Vorrichtung nach einem der vorhergehenden Ansprüche,
bei der die Einrichtung (202) zum Manipulieren eine Einrichtung (102, 108, 130, 150) zum Verarbeiten unter Verwendung einer Transformationsvorschrift ist, um einen Block von transformierten Werten zu erhalten, der der Sequenz von nichtganzzahligen diskreten Werten entspricht.

15. Vorrichtung nach Anspruch 14, bei der die Einrichtung zum Manipulieren (202) eine Einrichtung zum Durchführen eines DCT-IV-Algorithmus ist.

16. Vorrichtung nach einem der vorhergehenden Ansprüche, die Teil eines Codierers zum Erzeugen einer codierten Darstellung aus einem ursprünglichen Signal oder Teil eines Decodierers zum Erzeugen einer decodierten Darstellung aus einem codierten Signal ist.

17. Vorrichtung gemäß Anspruch 16, bei der der Codierer und der Decodierer zusammen ein verlustloses Codierschema darstellen.

18. Verfahren zum Verarbeiten eines Signals mit einer Sequenz von diskreten Werten, welche Audiodaten, Bilddaten oder Videodaten darstellen, wobei ein erster Frequenzbereich existiert, in dem das Signal eine hohe Energie hat, und wobei ein zweiter Frequenzbereich existiert, in dem das Signal eine niedrige Energie hat, mit folgenden Schritten:

Manipulieren (202) der Sequenz von diskreten Werten, um eine Sequenz von manipulierten Werten zu erhalten, so daß zumindest einer der manipulierten Werte nicht-ganzzahlig ist; und
Runden (204) der Sequenz von manipulierten Werten, um eine Sequenz von gerundeten ganzzahligen manipulierten Werten zu erhalten, wobei das Runden ausgebildet ist, um eine spektrale Formung eines erzeugten Rundungsfehlers so zu bewirken, daß ein spektral geformter Rundungsfehler in dem ersten Frequenzbereich eine höhere Energie hat als in dem zweiten Frequenzbereich.

19. Computerprogramm mit einem Programmcode zum Durchführen des Verfahrens nach Anspruch 18, wenn das Programm auf einem Computer abläuft.

**Claims**

1. Device for processing a signal having a sequence of discrete values representing audio data, image data or video data, wherein there is a first frequency range, in which the signal has a high energy, and wherein there is a second frequency range, in which the signal has a low energy, comprising:

   means (202) for manipulating the sequence of discrete values to obtain a sequence of manipulated values, so that at least one of the manipulated values is non-integer; and
   means (204) for rounding the sequence of manipulated values to obtain a sequence of rounded integer manipulated values, wherein the means (204) for rounding is formed to effect a spectral shaping of a generated rounding error so that a spectrally shaped rounding error has a higher energy in the first frequency range than in the second frequency range.

2. Device of claim 1, wherein the signal is a time signal, wherein the discrete values are time-discrete values, and further comprising:

   means (208) for converting at least the sequence of rounded manipulated values or a sequence derived from the sequence of rounded manipulated values to a spectral representation with spectral coefficients which contain more rounding error in the first frequency range than in the second frequency range; and
   means (208) for coding the spectral representation.

3. Device of claim 1 or 2, wherein the first frequency range is a range of low frequencies, wherein the second frequency range is a range of high frequencies, and wherein the means (204) for rounding is formed to effect the spectral shaping using a low-pass characteristic for filtering a fed back error e(n).

4. Device according to any of the preceding claims, wherein the means (204) for rounding is formed to round (218) a first discrete value, to determine (214) a rounding error generated in rounding the discrete value, to evaluate (220) the rounding error, and to combine (210) the evaluated rounding error with a second discrete value adjacent to the first discrete value in the sequence to obtain a combined value, and to round (218) the combined value to obtain a rounded version of the second value.

5. Device according to any of the preceding claims, wherein the means (204) for rounding is formed to evaluate the rounding error with a rounding function whose transfer function is equal to "-1".

6. Device according to any of the preceding claims, wherein the discrete values are integer values.

7. Device according to any of the preceding claims, wherein the means (204) for rounding is formed to generate rounded values having less accuracy than the manipulated values.

8. Device according to any of the preceding claims, formed to perform an integer windowing or an integer inverse windowing as processing, wherein the signal includes N/2 discrete values from a block of 2N discrete values, wherein the means (202a) for manipulating is formed to weight each of the N/2 discrete values with a value determined by a first lifting step, wherein the device further comprises a first adder (205a) for the value-wise adding of the sequence of rounded manipulated values to a sequence with further N/2 discrete values of the block of 2N discrete values to obtain a first sequence of added values, wherein the device further comprises further means (202b) for manipulating to weight each value of the first sequence of added values with a value determined by a second lifting step to obtain a further sequence of manipulated values, wherein the device comprises further means (204b) for rounding to obtain a further sequence of rounded manipulated values,

wherein the device comprises a second adder (205b) for value-wise adding to obtain a second sequence of added values,

wherein the device comprises still further means (202c) for manipulating to weight each value of the second sequence of added values with a value determined by a third lifting step to obtain a still further sequence of manipulated values, wherein the device further includes still further rounding means (204c) to obtain a still further sequence of rounded manipulated values,

wherein the device further includes a third adder (205c) to obtain a third sequence of added values,

wherein the still further sequence of manipulated values is N/2 windowed or inversely windowed values, and wherein the third sequence of added values is further N/2 windowed or inversely windowed values.

9. Device of claim 8,

wherein the means for manipulating is formed to use the following factors as weighting factors for the N/2 values:

$$GF_k = (\cos \alpha - 1)/\sin \alpha,$$

wherein $GF_k$ is the weighting factor for the value with an ordinal index k, and wherein $\alpha$ represents an angle to which the following equation applies:

$$\alpha = \arctan[w(N/2-1-k) \ / \ w(N/2 + k)]$$

wherein k runs between 0 and N/2-1, and wherein w represents a window function.

10. Device of claim 9,

wherein the means for manipulating is formed to use the following factors as weighting factors for the N/2 values:

$$GF_k = \sin \alpha$$

wherein $GF_k$ is the weighting factor for the value with an ordinal index k, and wherein $\alpha$ represents an angle to which the following equation applies:

$$\alpha = \arctan[w(N/2-1-k) \ / \ w(N/2 + k)]$$

wherein k runs between 0 and N/2-1, and wherein w represents a window function.

11. Device of any of claims 8, 9 or 10, wherein the still further means for manipulating is formed to use the following factors as weighting factors for the N/2 values:

$$GF_k = (\cos \alpha - 1)/\sin \alpha,$$

wherein $GF_k$ is the weighting factor for the value with an ordinal index k, and wherein $\alpha$ represents an angle to which the following equation applies:

$$\alpha = \arctan[w(N/2-1-k) \; / \; w(N/2 + k)]$$

wherein k runs between 0 and N/2-1, and wherein w represents a window function.

12. Device of any of claims 8 to 11, formed for a windowing and further followed by means (206) for converting, or formed for inverse windowing and preceded by means for inversely converting from a spectral domain to a time domain.

13. Device of claim 12, wherein the means for inversely converting or the means for converting include a DCT-IV means.

14. Device according to any of the preceding claims, wherein the means (202) for manipulating is a means (102, 108, 130, 150) for processing using a transform rule to obtain a block of transformed values corresponding to the sequence of non-integer discrete values.

15. Device of claim 14, wherein the means for manipulating (202) is a means for performing a DCT-IV algorithm.

16. Device according to any of the preceding claims, which is part of a coder for generating a coded representation from an original signal or part of a decoder for generating a decoded representation from a coded signal.

17. Device of claim 16, wherein the coder and the decoder together represent a lossless coding scheme.

18. Method for processing a signal having a sequence of discrete values representing audio data, image data or video data, wherein there is a first frequency range, in which the signal has a high energy, and wherein there is a second frequency range, in which the signal has a low energy, comprising:

   manipulating (202) the sequence of discrete values to obtain a sequence of manipulated values, so that at least one of the manipulated values is non-integer; and
   rounding (204) the sequence of manipulated values to obtain a sequence of rounded integer manipulated values, wherein the rounding is formed to effect a spectral shaping of a generated rounding error so that a spectrally shaped rounding error has a higher energy in the first frequency range than in the second frequency range.

19. Computer program with a program code for performing the method of claim 18, when the program runs on a computer.

**Revendications**

1. Dispositif pour traiter un signal avec une séquence de valeurs discrètes représentant des données audio, des données d'image ou des données vidéo, dans lequel existe une première plage de fréquences dans laquelle le signal a une haute énergie, et dans lequel existe une deuxième plage de fréquences dans laquelle le signal a une faible énergie, aux caractéristiques suivantes :

   un dispositif (202) destiné à manipuler la séquence de valeurs discrètes, pour obtenir une séquence de valeurs manipulées, de sorte qu'au moins l'une des valeurs manipulées soit non de nombre entier ; et
   un dispositif (204) destiné à arrondir la séquence de valeurs manipulées, pour obtenir une séquence de valeurs manipulées de nombre entier arrondies, le dispositif (204) destiné à arrondir étant réalisé de manière à entraîner une formation spectrale d'une erreur d'arrondi générée de sorte qu'une erreur d'arrondi formée spectralement dans la première plage de fréquences ait une énergie supérieure que dans la deuxième plage de fréquences.

2. Dispositif selon la revendication 1, dans lequel le signal est un signal dans le temps, dans lequel les valeurs discrètes sont des valeurs discrètes dans le temps, et qui présente les caractéristiques suivantes :

   un dispositif (208) destiné à convertir au moins la séquence de valeurs manipulées arrondies ou une séquence qui est dérivée de la séquence de valeurs manipulées arrondies en une représentation spectrale avec des coefficients spectraux qui sont plus fortement affectés d'erreur d'arrondi dans la première plage de fréquences que dans la deuxième plage de fréquences ; et
   un dispositif (208) destiné à coder la représentation spectrale.

**3.** Dispositif selon la revendication 1 ou 2, dans lequel la première plage de fréquences est une plage de basses fréquences, dans lequel la deuxième plage de fréquences est une plage de hautes fréquences et dans lequel le dispositif (204) destiné à arrondir est réalisé de manière à provoquer la formation spectrale à l'aide d'une caractéristique de passe-bas pour filtrer une erreur couplée rétroactivement e(n).

**4.** Dispositif selon l'une des revendications précédentes, dans lequel le dispositif (204) destiné à arrondir est réalisé de manière à arrondir une première valeur discrète (218), à déterminer une erreur d'arrondi produite lors d'un arrondi de la valeur discrète (214), à évaluer l'erreur d'arrondi (220), et à combiner l'erreur d'arrondi évaluée avec une deuxième valeur discrète qui est adjacente à la première valeur discrète dans la séquence (210), pour obtenir une valeur combinée, et à arrondir la valeur combinée (218), pour obtenir une version arrondie de la deuxième valeur.

**5.** Dispositif selon l'une des revendications précédentes, dans lequel le dispositif (204) destiné à arrondir est réalisé de manière à évaluer l'erreur d'arrondi avec une fonction d'arrondi dont la fonction de transmission est égale à "-1".

**6.** Dispositif selon l'une des revendications précédentes, dans lequel les valeurs discrètes sont des valeurs de nombre entier.

**7.** Dispositif selon l'une des revendications précédentes, dans lequel le dispositif (204) destiné à arrondir est réalisé de manière à générer des valeurs arrondies qui ont une moindre précision que les valeurs manipulées.

**8.** Dispositif selon l'une des revendications précédentes, qui est réalisé de manière à effectuer, comme traitement, une division en fenêtres de nombre entier ou une division en fenêtres de nombre entier inverse, le signal comprenant N/2 valeurs discrètes d'un bloc de 2N valeurs discrètes, le dispositif (202a) destiné à manipuler étant réalisé de manière à pondérer chacune des N/2 valeurs discrètes avec une valeur déterminée par une première étape d'élévation, le dispositif présentant, par ailleurs, un premier dispositif d'addition (205a) destiné à additionner par valeur la séquence de valeurs manipulées arrondies à une séquence avec N/2 autres valeurs discrètes du bloc de 2N valeurs discrètes, pour obtenir une première séquence de valeurs additionnées, le dispositif présentant, par ailleurs, un autre dispositif (202b) destiné à manipuler, pour pondérer chaque valeur de la première séquence de valeurs additionnées avec une valeur déterminée par une deuxième étape d'élévation, pour obtenir une autre séquence de valeurs manipulées, le dispositif présentant un autre dispositif (204b) destiné à arrondir, pour obtenir une autre séquence de valeurs manipulées arrondies, le dispositif présentant un deuxième dispositif d'addition (205b) destiné à additionner par valeur, pour obtenir une deuxième séquence de valeurs additionnées, le dispositif présentant encore un autre dispositif (202c) destiné à manipuler, pour pondérer chaque valeur de la deuxième séquence de valeurs additionnées avec une valeur déterminée par une troisième étape d'élévation, pour obtenir encore une autre séquence de valeurs manipulées, le dispositif présentant, par ailleurs, encore un autre dispositif d'arrondi (204c), pour obtenir encore une autre séquence de valeurs manipulées arrondies, le dispositif présentant, par ailleurs, un troisième dispositif d'addition (205c), pour obtenir une troisième séquence de valeurs additionnées, l'autre séquence encore de valeurs manipulées étant N/2 valeurs divisées en fenêtres ou inversement divisées en fenêtres, et la troisième séquence de valeurs additionnées étant N/2 autres valeurs divisées en fenêtres ou inversement divisées en fenêtres.

**9.** Dispositif selon la revendication 8, dans lequel le dispositif destiné à manipuler est réalisé de manière à utiliser, comme facteurs de pondération pour les N/2 valeurs, les facteurs suivants :

$$GF_k = (\cos \alpha - 1)/\sin \alpha,$$

$GF_k$ étant le facteur de pondération pour la valeur à indice d'ordre k et $\alpha$ représentant un angle pour lequel est d'application l'équation suivante :

$$\alpha = \arctan[w(N/2-1-k) \ / \ w(N/2 + k) \ ]$$

k allant de 0 à N/2-1 et w représentant une fonction de fenêtre.

**10.** Dispositif selon la revendication 9,
dans lequel le dispositif destiné à manipuler est réalisé de manière à utiliser, comme facteurs de pondération pour les N/2 valeurs, les facteurs suivants :

$$GF_k = \sin \alpha$$

$GF_k$ étant le facteur de pondération pour la valeur à indice d'ordre k et $\alpha$ représentant un angle pour lequel est d'application l'équation suivante :

$$\alpha = \arctan[w(N/2-1-k) \ / \ w(N/2 + k) \ ]$$

k allant de 0 à N/2-1 et w représentant une fonction de fenêtre.

**11.** Dispositif selon l'une des revendications 8, 9 ou 10, dans lequel l'encore autre dispositif destiné à manipuler est réalisé de manière à utiliser, comme facteurs de pondération pour les N/2 valeurs, les facteurs suivants :

$$GF_k = (\cos \alpha - 1)/\sin \alpha,$$

$GF_k$ étant le facteur de pondération pour la valeur à indice d'ordre k et $\alpha$ représentant un angle pour lequel est d'application l'équation suivante :

$$\alpha = \arctan[w(N/2-1-k) \ / \ w(N/2 + k) \ ]$$

k allant de 0 à N/2-1 et w représentant une fonction de fenêtre.

**12.** Dispositif selon l'une des revendications 8 à 11, qui est réalisé pour une division en fenêtres et après lequel est, par ailleurs, connecté un dispositif (206) destiné à convertir ou qui est réalisé pour une division en fenêtres inverse et avant lequel est connecté un dispositif destiné à la conversion inverse d'un domaine spectral en un domaine de temps.

**13.** Dispositif selon la revendication 12, dans lequel le dispositif destiné à la conversion inverse ou le dispositif destiné à la conversion comprend un dispositif DCT-IV.

**14.** Dispositif selon l'une des revendications précédentes,
dans lequel le dispositif (202) destiné à manipuler est un dispositif (102, 108, 130, 150) destiné à traiter à l'aide d'une règle de transformation, pour obtenir un bloc de valeurs transformées qui correspond à la séquence de valeurs discrètes non de nombre entier.

**15.** Dispositif selon la revendication 14, dans lequel le dispositif destiné à manipuler (202) est un dispositif destiné à effectuer un algorithme DCT-IV.

**16.** Dispositif selon l'une des revendications précédentes, qui fait partie d'un codeur destiné à générer une représentation codée à partir d'un signal original ou qui fait partie d'un décodeur destiné à générer une représentation décodée à partir d'un signal codé.

17. Dispositif selon la revendication 16, dans lequel le codeur et le décodeur représentent ensemble un plan de codage sans pertes.

18. Procédé pour traiter un signal avec une séquence de valeurs discrètes représentant des données audio, des données d'image ou des données vidéo, dans lequel existe une première plage de fréquences dans laquelle le signal a une haute énergie, et dans lequel existe une deuxième plage de fréquences dans laquelle le signal a une faible énergie, aux étapes suivantes consistant à :

manipuler (202) la séquence de valeurs discrètes, pour obtenir une séquence de valeurs manipulées, de sorte qu'au moins l'une des valeurs manipulées soit non de nombre entier ; et
arrondir (204) la séquence de valeurs manipulées, pour obtenir une séquence de valeurs manipulées de nombre entier arrondies, l'arrondi étant réalisé de manière à entraîner une formation spectrale d'une erreur d'arrondi générée de sorte qu'une erreur d'arrondi formée spectralement dans la première plage de fréquences ait une énergie supérieure que dans la deuxième plage de fréquences.

19. Programme d'ordinateur avec un code de programme pour l'exécution du procédé selon la revendication 18 lorsque le programme se déroule sur un ordinateur.

FIG. 1

FIG. 2a
(STAND DER TECHNIK)

$$Y(z) = X(z) + (1 - z^{-1} \cdot H(z)) \cdot E(z)$$

FIG. 2b

Z.B. H(z) = '-1'

FIG. 2c

FIG. 3

# FIG. 4

EP 1 647 009 B1

# FIG. 5

40   42   44   46

DCT-IV | DCT-IV | DCT-IV | DCT-IV

48

## FIG. 6A

402

ZEITDISKR.
AW
→ FENSTERN MIT
FENSTERLÄNGE 2N

2N
GEFENST.
AW
→

408

MDCT

N SPEKTRALWERTE
(1. FENSTER)

50%
OVERLAP

406

404

FENSTERN
LÄNGE 2N

2N
GEFENST.
AW
→

410

MDCT

N SPEKTRALWERTE
(2. FENSTER)

## FIG. 6B

412

N SW
1. FENSTER
→ MDCT$^{-1}$

2N AW 1. FENSTER

416

TDAC

$Y_1(N+k)+Y_2(k)$

N AW

414

N SW
1. FENSTER
→ MDCT$^{-1}$ .

2N AW 2. FENSTER

$X_1$

...

$X_{N/2}$

18 — $\cdot cs_1$   24 [·]   $\cdot cs_1$ —26   29a — $\cdot cs_k$   29b [·]   $\cdot cs_k$ —29c

20 — [·]   $\cdot s_1$   [·] —28   [·]   $\cdot s_k$   [·]

$X_{N/2+1}$

...   27

$X_N$

$$cs_k = \frac{\cos\alpha_k - 1}{\sin\alpha_k}; s_k = \sin\alpha_{ki};$$

$$\alpha_k = \arctan\frac{w(N/2-1-k)}{w(N/2+k)}$$

FENSTERN MIT LIFTING

# FIG. 7
(STAND DER TECHNIK)

31a   31b   31c

...

$\cdot cs_1$   ...   $\cdot cs_k$   [·]   [·]   $\cdot cs_1$   ...   $\cdot cs_k$

[·]   [·]   $\cdot s_1$   ...   $\cdot s_k$   [·]   [·]

...

FENSTERN MIT LIFTING
(UMSORTIERT)

# FIG. 8
(STAND DER TECHNIK)

FIG. 9

FIG. 10A

100A ⌇ 1. BLOCK VON DISKR. WERTEN

102 ⌇ | EINR. ZUM VERARBEITEN
1. TRANSFORM.-VORSCHRIFT |

1. BLOCK VON TRANSF.
WERTEN

104 ⌇ | EINR. ZUM RUNDEN |

1. BLOCK VON GERUND.
TRANSF. WERTEN        106

2. BLOCK VON
DISKR. WERTEN → | EINR. ZUM SUMMIEREN |

100B

2. BLOCK VON
SUMM.WERTEN        108

| EINR. ZUM VERARBEITEN
2. TRANSF.-VORSCHRIFT |

2. BLOCK VON
TRANSF.WERTEN        110

| EINR. ZUM RUNDEN |

2. BLOCK VON GER.
TRANSF.WERTEN        112

114

| EINR. ZUM SUBTRAHIEREN |

BLOCK VON
GANZZAHLIGEN
AUSGANGSWERTEN DER
TRANSFORMIERTEN
DARSTELLUNG

FIG. 10B

$120$ ⌇ 2. BLOCK VON SUMMIERTEN
WERTEN

$130$ ⌇
EINR. ZUM VERARBEITEN
2.TRANSF.-VORSCHRIFT

1. BLOCK VON TRANSF.
WERTEN

EINR. ZUM RUNDEN ⌇$132$

1. BLOCK VON
GERUNDETEN
TRANSF. WERTEN

$122$

BLOCK VON AUSGANGSWERTEN
DER TRANSF. DARSTELLG.

EINR. ZUM SUMMIEREN ⌇$134$

$149$

ERSTER BLOCK
VON DISKRETEN WERTEN

EINR. ZUM VERARBEITEN
1.TRANSFORMATIONS VORSCHR. ⌇$150$

2. BLOCK VON
TRANSFORMIERTEN
WERTEN

EINRICHTUNG ZUM RUNDEN ⌇$152$

2. BLOCK VON GERUNDETEN
TRANSFORMIERTEN WERTEN

$136$

EINRICHTUNG ZUM
SUBTRAHIEREN ⌇$154$

2. BLOCK VON
SUMMIERTEN
WERTEN

2. BLOCK VON
DISKRETEN
WERTEN

FIG. 10C (UMSETZEN IN TRANSFORMIERTE DARSTELLUNG)

FIG. 11    (INVERSE UMSETZUNG DER TRANSFORM. DARSTELLG.)

# FIG. 12

# FIG. 13

LIFTING-SCHRITT MIT TRANSFORMATIONSMATRIX
BEIM UMSETZEN

## FIG. 14

INVERSER LIFTING-SCHRITT MIT TRANSF.-MATRIX
BEIM INVERSEN UMSETZEN

## FIG. 15

FIG. 16

FIG. 17

FIG. 18

FIG. 19